# EUROPEAN PATENT APPLICATION

(11) **EP 4 685 972 A1**
(43) Date of publication of application: **28.01.2026**
(21) Application number: 23927901.1
(22) Date of filing: 17.03.2023
(51) Int. Cl.: H01M 50/449, H01M 50/491, H01M 50/46

(54) **SEPARATOR, SECONDARY BATTERY, AND ELECTRICAL APPARATUS**

(71) Applicant: Contemporary Amperex Technology (Hong Kong) Limited, Hong Kong (HK)
(72) Inventor: WANG, Zhaoguang, Ningde, Fujian 352100 (CN); YANG, Jianrui, Ningde, Fujian 352100 (CN); SUN, Chengdong, Ningde, Fujian 352100 (CN); HUANG, Siying, Ningde, Fujian 352100 (CN); OUYANG, Chuying, Ningde, Fujian 352100 (CN); HAN, Chongwang, Ningde, Fujian 352100 (CN)
(74) Representative: Gong, Jinping
(86) International application number: PCT/CN2023/082282
(87) International publication number: WO 2024/192582

(57) **Abstract**

This application provides a separator, a secondary battery, and an electric apparatus. The separator includes a first base film, a second base film, and a binding layer. The binding layer is disposed between the first base film and the second base film. A stiffness of the separator in a transverse direction is denoted as T₀, and a stiffness of the separator in a machine direction is denoted as M₀, where T₀ is 1.0-8.0 mN×cm, and M₀ is 1.2-7.0 mN×cm.

## Description

### TECHNICAL FIELD

This application relates to a separator, a secondary battery, and an electric apparatus.

### BACKGROUND

In recent years, secondary batteries have been widely used in energy storage power supply systems such as hydroelectric, thermal, wind, and solar power plants, and many other fields including electric tools, electric bicycles, electric motorcycles, electric vehicles, military equipment, and aerospace. With the application and promotion of secondary batteries, the requirements for their reliability have gradually become more stringent.

### SUMMARY

This application provides a separator, a secondary battery, and an electric apparatus, which can improve the production yield of secondary batteries and enhance the reliability of secondary batteries.

A first aspect of this application provides a separator including a first base film, a second base film, and a binding layer, where the binding layer is disposed between the first base film and the second base film, a stiffness of the separator in a transverse direction is denoted as T0, and a stiffness of the separator in a machine direction is denoted as M0, where T0 is 1.0-8.0 mN×cm, and M₀ is 1.2-7.0 mN×cm.

When the separator includes the first base film, the second base film, and the binding layer located between the first base film and the second base film, and the stiffness T₀ of the separator in the transverse direction is made between 1.0 mN×cm and 8.0 mN×cm, and the stiffness M₀ of the separator in the machine direction is made between 1.2 mN×cm and 7.0 mN×cm, the probability of abnormalities such as curling, warping, wrinkling, and stretching during production and processing, slitting, secondary battery preparation, and other processes can be reduced, and the morphology of the separator can be kept regular, thereby improving the production yield of a secondary battery. In addition, the size of the separator can be more accurately controlled to reduce the probability of an excessively small local size of the processed separator, thereby reducing the probability of a short circuit between a positive electrode and a negative electrode, reducing the probability of safety accidents such as fire and explosion of a secondary battery, and improving the reliability of the secondary battery. Furthermore, the separator can have good heat resistance and high mechanical strength. When the separator is used in a secondary battery, dendrites growing on the negative electrode side are not prone to pierce the separator, and the thermal shrinkage of the separator is relatively low, thereby improving the reliability of the secondary battery. Therefore, the separator provided in embodiments of this application can improve the production yield of the secondary battery and also improve the reliability of the secondary battery.

In any embodiment of this application, the stiffness T₀ of the separator in the transverse direction is 1.7-5.0 mN×cm, optionally 1.9-4.7 mN×cm.

In any embodiment of this application, the stiffness M₀ of the separator in the machine direction is 1.2-4.0 mN×cm, optionally 1.5-3.3 mN×cm.

Thus, the heat resistance of the separator can be further improved, the reliability of the secondary battery can be improved, and the production yield of the secondary battery can also be improved.

In any embodiment of this application, T₀/M₀ is 1.0-2.5, optionally 1.2-2.0. Thus, the heat resistance of the separator can be further improved, the reliability of the secondary battery can be improved, and the production yield of the secondary battery can also be improved.

In any embodiment of this application, a stiffness of the first base film in a transverse direction is denoted as T₁, where T₁ is 0.25-4.5 mN×cm, optionally 0.9-3.0 mN×cm.

In any embodiment of this application, a stiffness of the first base film in a machine direction is denoted as M₁, where M₁ is 0.15-4.0 mN×cm, optionally 0.6-3.0 mN×cm.

In any embodiment of this application, T₁/M₁ is 1.0-3.0, optionally 1.2-2.0.

With the stiffness T₁ in the transverse direction, the stiffness M₁ in the machine direction, and the ratio T₁/M₁ of the two of the first base film adjusted within the above ranges, the heat resistance of the separator can be further improved, the reliability of the secondary battery can be improved, and the production yield of the secondary battery can also be improved.

In any embodiment of this application, a stiffness of the second base film in a transverse direction is denoted as T₂, where T₂ is 0.3-5.0 mN×cm, optionally 0.8-3.5 mN×cm.

In any embodiment of this application, a stiffness of the second base film in a machine direction is denoted as M₂, where M₂ is 0.2-4.5 mN×cm, optionally 0.5-3.0 mN×cm.

In any embodiment of this application, T₂/M₂ is 1.0-3.5, optionally 1.1-1.9.

With the stiffness T₂ in the transverse direction, the stiffness M₂ in the machine direction, and the ratio T₂/M₂ of the second base film adjusted within the above ranges, the heat resistance of the separator can be further improved, the reliability of the secondary battery can be improved, and the production yield of the secondary battery can also be improved.

In any embodiment of this application, an average fiber diameter of the first base film is 80-300 nm, optionally 100-280 nm.

In any embodiment of this application, an average fiber diameter of the second base film is 100-300 nm, optionally 120-280 nm.

With the average fiber diameter of the first base film and/or the average fiber diameter of the second base film adjusted within the above ranges, the stiffnesses of the first base film, the second base film, and the separator can be adjusted, and the separator can have good heat resistance and high ionic conductivity, thereby improving the reliability of the secondary battery and enhancing the electrochemical performance of the secondary battery.

In any embodiment of this application, a ratio of a crystallinity of the second base film to a crystallinity of the first base film is greater than 1, optionally 1.03-1.5, and more optionally 1.05-1.25.

The separator has the first base film face towards the negative electrode and the second base film face towards the positive electrode. Adjusting the ratio of the crystallinity of the second base film to the crystallinity of the first base film to be greater than 1 can adjust the stiffnesses of the first base film, the second base film, and the separator and is also beneficial to preparing a wound electrode assembly.

In any embodiment of this application, a crystallinity of the first base film is 33%-70%, optionally 35%-45%.

In any embodiment of this application, a crystallinity of the second base film is 35%-80%, optionally 40%-55%.

With the crystallinity of the first base film and/or the crystallinity of the second base film adjusted within the above range, the stiffnesses of the first base film, the second base film, and the separator can be adjusted, and the separator can have good mechanical strength and elasticity, thereby helping to improve the high-temperature resistance and reliability of the secondary battery and facilitating the preparation of a wound electrode assembly.

In any embodiment of this application, a ratio of a thickness of the second base film to a thickness of the first base film is greater than 1, optionally 1.02-5.0, and more optionally 1.2-2.5.

The separator has the first base film face towards the negative electrode, and the second base film face towards the positive electrode. Adjusting the ratio of the thickness of the second base film to the thickness of the first base film to be greater than 1 can adjust the stiffnesses of the first base film, the second base film, and the separator. Additionally, the thickness of the first base film is smaller. The stretching ratio during preparation is usually larger, resulting in a higher degree of orientation and higher physical strength (for example, puncture strength). Therefore, the first base film facing towards the negative electrode can better alleviate dendrite growth and improve the reliability of the secondary battery.

In any embodiment of this application, a thickness of the first base film is less than or equal to 12 µm, optionally 2.5-5 µm.

In any embodiment of this application, a thickness of the second base film is less than or equal to 14 µm, optionally 3-6 µm.

Adjusting the thickness of the first base film and/or the thickness of the second base film within the above range can adjust the stiffnesses of the first base film, the second base film, and the separator and is also beneficial to high energy density of the secondary battery.

In any embodiment of this application, a ratio of a melting point of the first base film to a melting point of the second base film is less than 1, optionally 0.2-0.95, and more optionally 0.35-0.90.

The separator has the first base film face towards the negative electrode, and the second base film face towards the positive electrode. Adjusting the ratio of the melting point of the first base film to the melting point of the second base film to be less than 1 can adjust the stiffnesses of the first base film, the second base film, and the separator. Additionally, the first base film has a lower melting point and higher physical strength (for example, puncture strength). Therefore, the first base film facing towards the negative electrode can better alleviate dendrite growth and improve the reliability of the secondary battery.

In any embodiment of this application, a melting point of the first base film is greater than or equal to 110°C, optionally 120°C-165°C.

In any embodiment of this application, a melting point of the second base film is greater than or equal to 150°C, optionally 165°C-330°C.

With the melting point of the first base film and/or the melting point of the second base film adjusted within the above range, the stiffnesses of the first base film, the second base film, and the separator can be adjusted, and the separator can have good pore-closing characteristics, thereby helping to improve the reliability of the secondary battery.

In any embodiment of this application, a ratio of a porosity of the second base film to a porosity of the first base film is greater than 1, optionally 1.01-2.8, and more optionally 1.1-2.0.

The first base film of the separator faces towards the negative electrode, and the second base film faces towards the positive electrode. Adjusting the ratio of the porosity of the second base film to the porosity of the first base film to be greater than 1 can adjust the stiffnesses of the first base film, the second base film, and the separator. Additionally, the first base film with a smaller porosity facing towards the negative electrode can better alleviate dendrite growth and improve the reliability of the secondary battery.

In any embodiment of this application, a porosity of the first base film is 28%-70%, optionally 30%-50%.

In any embodiment of this application, a porosity of the second base film is 30%-80%, optionally 35%-60%.

Adjusting the porosity of the first base film and/or the porosity of the second base film within the above range can adjust the stiffnesses of the first base film, the second base film, and the separator and can provide the separator with good ionic conductivity, thereby also helping to improve the cycling performance, kinetics performance, and the like of the secondary battery.

In any embodiment of this application, a porosity of the separator is 27%-65%, optionally 33%-55%.

In any embodiment of this application, a ratio of an average pore size of the second base film to an average pore size of the first base film is greater than 1, optionally 1.05-2.5, and more optionally 1.1-2.

The first base film of the separator faces towards the negative electrode, and the second base film faces towards the positive electrode. Adjusting the ratio of the average pore size of the second base film to the average pore size of the first base film to be greater than 1 can adjust the stiffnesses of the first base film, the second base film, and the separator. Additionally, the first base film with a smaller average pore size facing towards the negative electrode can better alleviate dendrite growth and can more evenly distribute ion flows from the positive electrode, thereby reducing problems such as rapid growth of dendrites and over-sharp morphology of dendrites that are caused by an excessively large ion concentration at a local position of the negative electrode, and also helping to improve the cycling performance and kinetics performance of the secondary battery.

In any embodiment of this application, an average pore size of the first base film is 48-1800 nm, optionally 50-300 nm.

In any embodiment of this application, an average pore size of the second base film is 50-2000 nm, optionally 100-400 nm.

With the average pore size of the first base film and/or the average pore size of the second base film adjusted within the above range, the stiffnesses of the first base film, the second base film, and the separator can be adjusted; the first base film and the second base film can better alleviate dendrite growth and improve the reliability of the secondary battery; and the separator can also have good ionic conductivity, thereby helping to improve the cycling performance, kinetics performance, and the like of the secondary battery.

In any embodiment of this application, a ratio of an air permeability of the first base film to an air permeability of the second base film is greater than 1, optionally 1.05-3.0, and more optionally 1.08-2.0.

The first base film of the separator faces towards the negative electrode, and the second base film faces towards the positive electrode. Adjusting the ratio of the air permeability of the first base film to the air permeability of the second base film to be greater than 1 can adjust the stiffnesses of the first base film, the second base film, and the separator. Additionally, the first base film with a larger air permeability facing towards the negative electrode can better alleviate dendrite growth and improve the reliability of the secondary battery.

In any embodiment of this application, an air permeability of the first base film is less than or equal to 300 s/100 cc, optionally 120-260 s/100 cc.

In any embodiment of this application, an air permeability of the second base film is less than or equal to 250 s/100 cc, optionally 110-220 s/100 cc.

Adjusting the air permeability of the first base film and/or the air permeability of the second base film within the above range can adjust the stiffnesses of the first base film, the second base film, and the separator and can provide the separator with good ionic conductivity, thereby also helping to improve the cycling performance, kinetics performance, and the like of the secondary battery.

In any embodiment of this application, the first base film and the second base film each independently include one or more of polyolefin and a derivative thereof, halogenated polyolefin and a derivative thereof, polyether and a derivative thereof, polyether ether ketone and a derivative thereof, polyester and a derivative thereof, polyimide and a derivative thereof, and polyvinyl alcohol and a derivative thereof.

In any embodiment of this application, the halogenated polyolefin and a derivative thereof include one or more of polytetrafluoroethylene and a derivative thereof, polyvinyl fluoride and a derivative thereof, and polyvinylidene fluoride and a derivative thereof.

In any embodiment of this application, the polyester and a derivative thereof include one or more of polyethylene terephthalate and a derivative thereof, and polybutylene terephthalate and a derivative thereof.

In any embodiment of this application, the binding layer includes a binder. The binder can ensure the adhesion strength and uniformity of the first base film and the second base film, and impart good heat resistance to the separator, thereby helping to improve the reliability of the secondary battery.

In any embodiment of this application, the binding layer includes a binder and a filler. The filler can further improve the heat resistance and physical performance (for example, puncture strength) of the separator, thereby helping to improve the reliability of the secondary battery. Additionally, the filler is located between the first base film and the second base film, thereby reducing issues such as powder shedding.

In any embodiment of this application, the binder includes one or more of polyacrylate, polyacrylic acid, polytetrafluoroethylene, polyvinylidene fluoride, vinylidene fluoride-trichloroethylene copolymer, polyvinyl pyrrolidone, polyvinyl acetate, ethylene-vinyl acetate copolymer, polyethylene oxide, polyarylate, carboxymethyl cellulose, hydroxypropyl cellulose, regenerated cellulose, cellulose acetate, cellulose acetate propionate, cellulose acetate butyrate, polyacrylonitrile, polyvinyl alcohol, polyethylene, polypropylene, starch, and cyanoethyl branched starch.

In any embodiment of this application, the filler includes at least one of inorganic particle, organic particle, and organic-metal framework material. Optionally, the inorganic particle includes one or more of inorganic particle with a dielectric constant above 5, inorganic particle with ionic conductivity but not storing an ion, and inorganic particle capable of undergoing an electrochemical reaction; optionally, the organic particle includes one or more of polycarbonate, polythiophene, polypyridine, polystyrene, polyacrylic wax, polyethylene, polypropylene, cellulose, cellulose modifier, melamine resin, phenolic resin, polyester, silicone resin, polyimide, polyamide-imide, polyaromatic amide, polyphenylene sulfide, polysulfone, polyether sulfone, polyether ether ketone, polyarylether ketone, copolymer of butyl acrylate and ethyl methacrylate; and optionally, the organic-metal framework material includes one or more of nitrogen-containing heterocyclic ligand assembly structure, organic carboxylic acid ligand assembly structure, and nitrogen-oxygen mixed ligand assembly structure.

In any embodiment of this application, a thickness of the binding layer is greater than or equal to 0.3 µm, optionally 0.5-4 µm. When the thickness of the binding layer is within the above range, the separator can have an appropriate thickness, and the separator can also have good heat resistance and physical strength, thereby improving the reliability of the secondary battery.

In any embodiment of this application, a surface density of the binding layer is 1.0-6.0 g/m², optionally 1.2-5.0 g/m².

In any embodiment of this application, a binding strength between the binding layer and the first base film is greater than or equal to 3 N/m, optionally 4-15 N/m.

In any embodiment of this application, a binding strength between the binding layer and the second base film is greater than or equal to 3 N/m, optionally 4-15 N/m.

In any embodiment of this application, a percentage of the binder is greater than or equal to 10%, optionally 10%-30%, based on a total weight of the binding layer.

In any embodiment of this application, a percentage of the filler is less than or equal to 90%, optionally 60%-80%, based on a total weight of the binding layer.

In any embodiment of this application, a volume distribution particle size Dᵥ50 of the filler is less than or equal to 1.5 µm, optionally 0.1-1.4 µm.

In any embodiment of this application, a transverse tensile strength of the separator is greater than or equal to 700 kg/cm², optionally greater than or equal to 1000 kg/cm².

In any embodiment of this application, a machine tensile strength of the separator is greater than or equal to 1000 kg/cm², optionally greater than or equal to 1200 kg/cm².

In any embodiment of this application, a transverse thermal shrinkage of the separator at 250°C for 1 h is less than or equal to 5%, optionally less than or equal to 2%.

In any embodiment of this application, a machine thermal shrinkage of the separator at 250°C for 1 h is less than or equal to 5%, optionally less than or equal to 2%.

A second aspect of this application provides a secondary battery including the separator in the first aspect of this application.

In any embodiment of this application, the secondary battery includes a positive electrode plate and a negative electrode plate, the separator is disposed between the positive electrode plate and the negative electrode plate, and the first base film of the separator faces towards the negative electrode plate and the second base film of the separator faces towards the positive electrode plate.

A third aspect of this application provides an electric apparatus including the secondary battery of the second aspect of this application.

The electric apparatus in this application includes the secondary battery provided in this application, and therefore has at least advantages that are the same as those of the secondary battery.

### BRIEF DESCRIPTION OF DRAWINGS

To describe the technical solutions of the embodiments of this application more clearly, the following briefly describes the accompanying drawings for describing the embodiments of this application. Apparently, the accompanying drawings in the following descriptions show merely some embodiments of this application, and persons of ordinary skill in the art may derive other drawings from these accompanying drawings without creative efforts.
FIG. 1 is a schematic diagram of an embodiment of a secondary battery in this application.
FIG. 2 is a schematic exploded view of an embodiment of a secondary battery in this application.
FIG. 3 is a schematic diagram of an embodiment of a battery module in this application.
FIG. 4 is a schematic diagram of an embodiment of a battery pack in this application.
FIG. 5 is a schematic exploded view of the embodiment of the battery pack shown in FIG. 4.
FIG. 6 is a schematic diagram of an embodiment of an electric apparatus using a secondary battery in this application as a power source.

In the accompanying drawings, the figures are not necessarily drawn to scale. Reference signs are as follows: 1. battery pack, 2. upper box body, 3. lower box body, 4. battery module, 5. secondary battery, 51. housing, 52. electrode assembly, and 53. cover plate.

### DESCRIPTION OF EMBODIMENTS

The following specifically discloses in detail embodiments of the separator, the secondary battery, and the electric apparatus of this application, with appropriate reference to the accompanying drawings. However, there may be cases in which unnecessary detailed descriptions are omitted. For example, detailed descriptions of well-known matters and repeated descriptions of actually identical structures have been omitted. This is to avoid unnecessarily prolonging the following descriptions, for ease of understanding by persons skilled in the art. In addition, the accompanying drawings and the following descriptions are provided for those skilled in the art to fully understand this application and are not intended to limit the subject described in the claims.

"Ranges" disclosed in this application are defined in the form of lower and upper limits. A given range is defined by one lower limit and one upper limit selected, where the selected lower and upper limits define boundaries of that special range. Ranges defined in this way may or may not include end values, and any combination may be used, meaning that any lower limit may be combined with any upper limit to form a range. For example, if ranges of 60-120 and 80-110 are provided for a specific parameter, it is understood that ranges of 60-110 and 80-120 can also be envisioned. In addition, if low limit values of a range are given as 1 and 2, and upper limit values of the range are given as 3, 4, and 5, the following ranges can all be envisioned: 1-3, 1-4, 1-5, 2-3, 2-4, and 2-5. In this application, unless otherwise stated, a value range of "a-b" is a short representation of any combination of real numbers between a and b, where both a and b are real numbers. For example, a value range of "0-5" means that all real numbers in the range of "0-5" are listed herein and "0-5" is just a short representation of combinations of these values. In addition, a parameter expressed as an integer greater than or equal to 2 is equivalent to disclosure that the parameter is, for example, an integer among 2, 3, 4, 5, 6, 7, 8, 9, 10, 11, 12, and so on.

Unless otherwise specified, all the embodiments and optional embodiments of this application can be combined with each other to form new technical solutions, and such technical solutions should be considered to be included in the disclosure of this application.

Unless otherwise specified, all the technical features and optional technical features of this application can be combined with each other to form new technical solutions, and such technical solutions should be considered to be included in the disclosure of this application.

Unless otherwise specified, all the steps in this application can be performed in the order described or in random order, preferably, in the order described. For example, a method including steps (a) and (b) indicates that the method may include steps (a) and (b) performed in order or may include steps (b) and (a) performed in order. For example, the foregoing method may further include step (c), which indicates that step (c) may be added to the method in any ordinal position, for example, the method may include steps (a), (b), and (c), steps (a), (c), and (b), steps (c), (a), and (b), or the like.

Unless otherwise specified, "include" and "contain" mentioned in this application are inclusive or may be exclusive. For example, the terms "include" and "contain" can mean that other unlisted components may also be included or contained, or only listed components are included or contained.

Unless otherwise stated, in this application, the term "or" is inclusive. For example, the phrase "A or B" means "A, B, or both A and B". More specifically, any one of the following conditions satisfies the condition "A or B": A is true (or present) and B is false (or not present); A is false (or not present) and B is true (or present); or both A and B are true (or present).

Unless otherwise specified, in this application, the terms "first", "second", and the like are intended to distinguish between different objects rather than to indicate a particular order or relative importance.

In this application, the term "a plurality of" means two or more than two and the term "a plurality of types" means two types or more than two types.

Unless otherwise specified, the terms used in this application have well-known meanings commonly understood by persons skilled in the art.

Unless otherwise specified, numerical values of parameters mentioned in this application may be determined by using various measurement methods commonly used in the art. For example, they may be determined by using the methods provided in the embodiments of this application. Unless otherwise specified, the test temperature of each parameter is 25°C.

Unless otherwise specified, the ratio parameters involved in this application are compared under the same units. For example, the thickness of A and B is 1.2:1, and in this case, the thickness units of A and B are the same.

Typically, a secondary battery includes an electrode assembly and an electrolyte. The electrode assembly includes a positive electrode plate, a negative electrode plate, and a separator. The separator is disposed between the positive electrode plate and the negative electrode plate, mainly to prevent a short circuit between a positive electrode and a negative electrode.

A separator provided in the embodiments of this application includes a first base film, a second base film, and a binding layer, where the binding layer is disposed between the first base film and the second base film, a stiffness of the separator in a transverse (TD) direction is denoted as T₀, and a stiffness of the separator in a machine (MD) direction is denoted as M₀, where T₀ is 1.0-8.0 mN×cm, and M₀ is 1.2-7.0 mN×cm.

For example, the stiffness T₀ of the separator in the transverse (TD) direction can be 1.0 mN×cm, 1.5 mN×cm, 1.7 mN×cm, 2.0 mN×cm, 2.3 mN×cm, 2.5 mN×cm, 2.8 mN×cm, 3.1 mN×cm, 3.4 mN×cm, 3.7 mN×cm, 4.0 mN×cm, 4.2 mN×cm, 4.5 mN×cm, 4.7 mN×cm, 4.9 mN×cm, 5.0 mN×cm, 5.2 mN×cm, 5.5 mN×cm, 5.8 mN×cm, 6.0 mN×cm, 6.2 mN×cm, 6.5 mN×cm, 6.8 mN×cm, 7.0 mN×cm, 7.5 mN×cm, 8.0 mN×cm, or a range defined by any two of the above values.

The stiffness M₀ of the separator in the machine (MD) direction can be 1.2 mN×cm, 1.5 mN×cm, 1.8 mN×cm, 1.9 mN×cm, 2.0 mN×cm, 2.2 mN×cm, 2.5 mN×cm, 2.7 mN×cm, 3.0 mN×cm, 3.3 mN×cm, 3.5 mN×cm, 3.8 mN×cm, 4.0 mN×cm, 4.2 mN×cm, 4.5 mNxcm, 4.8 mN×cm, 5.0 mN×cm, 5.2 mN×cm, 5.5 mN×cm, 5.8 mN×cm, 6.0 mN×cm, 6.2 mN×cm, 6.5 mN×cm, 6.8 mN×cm, 7.0 mN×cm, or a range defined by any two of the above values.

Currently, separators used in commercial secondary batteries are usually made of polyolefin. For example, the separator can be a polyethylene porous film or a polypropylene porous film. However, these separators have poor heat resistance and exhibit significant thermal shrinkage effects when heated, causing a positive electrode and a negative electrode of a battery to easily come into direct contact, thus leading to an internal short circuit and increasing the safety risks of the secondary battery. To solve the above problems, the current measure mainly involves applying a layer of heat-resistant inorganic ceramic on the surface of the separator made of polyolefin. However, the inorganic ceramic layer has limited improvement in the overall heat resistance of the separator. Additionally, the adhesion of the inorganic ceramic layer is poor, leading to issues such as powder shedding.

In addition, the polyethylene porous film, the polypropylene porous film, and the like are prone to abnormal phenomena such as curling, warping, wrinkling, and stretching during production and processing, slitting, and other processes. Moreover, the finished separators are prone to an excessively small local size and prone to a short circuit between the positive electrode and the negative electrode when used in a secondary battery, thereby affecting the reliability of the secondary battery.

Without wishing to be bound by any theory, the inventors have found through extensive research that when the separator includes the first base film, the second base film, and the binding layer located between the first base film and the second base film, and the stiffness T₀ of the separator in the transverse (TD) direction is made between 1.0 mN×cm and 8.0 mN×cm, and the stiffness M₀ of the separator in the machine (MD) direction is made between 1.2 mN×cm and 7.0 mN×cm, the probability of abnormalities such as curling, warping, wrinkling, and stretching during production and processing, slitting, secondary battery preparation, and other processes of the separator can be reduced, and the morphology of the separator can be kept regular, thereby improving the production yield of a secondary battery. In addition, the size of the separator can be more accurately controlled to reduce the probability of an excessively small local size of the processed separator, thereby reducing the probability of a short circuit between a positive electrode and a negative electrode, reducing the probability of safety accidents such as fire and explosion of a secondary battery, and improving the reliability of the secondary battery.

The separator provided in the embodiments of this application, with the stiffness T₀ in the transverse (TD) direction between 1.0 mN×cm and 8.0 mN×cm and the stiffness M₀ in the machine (MD) direction between 1.2 mN×cm and 7.0 mN×cm, can also have good heat resistance and high mechanical strength. When the separator is used in a secondary battery, dendrites growing on the negative electrode side are not prone to pierce the separator, and the thermal shrinkage of the separator is relatively low, thereby improving the reliability of the secondary battery.

Therefore, the separator provided in the embodiments of this application can improve the production yield of the secondary battery and also improve the reliability of the secondary battery.

The inventors have found during research that when the stiffness T₀ of the separator in the transverse (TD) direction is less than 1.0 mN×cm and/or the stiffness M₀ of the separator in the machine (MD) direction is less than 1.2 mN×cm, the separator is prone to abnormal phenomena such as curling, warping, wrinkling, and stretching during production and processing, slitting, secondary battery preparation, and other processes, resulting in a low production yield of the secondary battery. Additionally, the prepared separator has poor heat resistance and is prone to an excessively small local size, leading to a high probability of a short circuit between the positive electrode and the negative electrode, thereby affecting the reliability of the secondary battery.

When the stiffness T₀ of the separator in the transverse (TD) direction is greater than 8.0 mN×cm and/or the stiffness M₀ of the separator in the machine (MD) direction is greater than 7.0 mN×cm, the stiffness of the separator is too high, resulting in reduced flexibility, making it difficult to fold and compress, thereby reducing the production yield of the secondary battery. Additionally, in winding and compression processes, the first base film and/or the second base film is prone to destructive deformation or separation from the binding layer, thereby increasing safety risks. Furthermore, when the stiffness of the separator is too high, the thickness thereof usually increases, and during heating, the thermal shrinkage degree of the fibers in the separator also increases, ultimately resulting in an increased thermal shrinkage of the separator, an increased probability of a short circuit between the positive electrode and the negative electrode, and a decrease in the reliability of the secondary battery.

Optionally, in some embodiments, the stiffness T₀ of the separator in the transverse (TD) direction can alternatively be 1.5-7.0 mN×cm, 1.7-7.0 mN×cm, 1.9-7.0 mN×cm, 2.0-7.0 mN×cm, 1.5-6.0 mN×cm, 1.7-6.0 mN×cm, 1.9-6.0 mN×cm, 2.0-6.0 mN×cm, 1.5-5.0 mN×cm, 1.7-5.0 mN×cm, 1.9-5.0 mN×cm, 2.0-5.0 mN×cm, 1.5-4.7 mN×cm, 1.7-4.7 mN×cm, 1.9-4.7 mN×cm, 2.0-4.7 mN×cm, 1.5-4.5 mN×cm, 1.7-4.5 mN×cm, 1.9-4.5 mN×cm, or 2.0-4.5 mN×cm.

Optionally, in some embodiments, the stiffness M₀ of the separator in the machine (MD) direction can alternatively be 1.2-6.0 mN×cm, 1.5-6.0 mN×cm, 1.6-6.0 mN×cm, 1.7-6.0 mN×cm, 1.8-6.0 mN×cm, 1.9-6.0 mN×cm, 1.2-5.0 mN×cm, 1.5-5.0 mN×cm, 1.6-5.0 mN×cm, 1.7-5.0 mN×cm, 1.8-5.0 mN×cm, 1.9-5.0 mN×cm, 1.2-4.0 mN×cm, 1.5-4.0 mN×cm, 1.6-4.0 mN×cm, 1.7-4.0 mN×cm, 1.8-4.0 mN×cm, 1.9-4.0 mN×cm, 1.2-3.5 mN×cm, 1.5-3.5 mN×cm, 1.6-3.5 mN×cm, 1.7-3.5 mN×cm, 1.8-3.5 mN×cm, 1.9-3.5 mN×cm, 1.2-3.3 mN×cm, 1.5-3.3 mN×cm, 1.6-3.3 mN×cm, 1.7-3.3 mN×cm, 1.8-3.3 mN×cm, or 1.9-3.3 mN×cm.

Thus, the heat resistance of the separator can be further improved, the reliability of the secondary battery can be improved, and the production yield of the secondary battery can also be improved.

In some embodiments, the ratio T₀/M₀ of the stiffness T₀ of the separator in the transverse (TD) direction to the stiffness M₀ of the separator in the machine (MD) direction can be 1.0-2.5, optionally 1.1-2.0, 1.15-2.0, 1.2-2.0, 1.25-2.0, 1.1-1.8, 1.15-1.8, 1.2-1.8, 1.25-1.8, 1.1-1.75, 1.15-1.75, 1.2-1.75, 1.25-1.75, 1.1-1.7, 1.15-1.7, 1.2-1.7, or 1.25-1.7. Thus, the heat resistance of the separator can be further improved, the reliability of the secondary battery can be improved, and the production yield of the secondary battery can also be improved.

In some embodiments, the stiffness of the first base film in the transverse (TD) direction is denoted as T₁, and T₁ can be 0.25-4.5 mN×cm. For example, it can be 0.25 mN×cm, 0.5 mN×cm, 0.8 mN×cm, 0.9 mN×cm, 1.0 mN×cm, 1.2 mN×cm, 1.5 mN×cm, 1.7 mN×cm, 2.0 mN×cm, 2.2 mN×cm, 2.5 mN×cm, 3.0 mN×cm, 3.5 mN×cm, 4.0 mN×cm, 4.5 mN×cm, or a range defined by any two of the above values. Optionally, in some embodiments, the stiffness T₁ of the first base film in the transverse (TD) direction can alternatively be 0.5-4 mN×cm, 0.5-3.5 mN×cm, 0.5-3.0 mN×cm, 0.5-2.5 mN×cm, 0.5-2.0 mN×cm, 0.8-4 mN×cm, 0.8-3.5 mN×cm, 0.8-3.0 mN×cm, 0.8-2.5 mN×cm, 0.8-2.0 mN×cm, 0.9-4 mN×cm, 0.9-3.5 mN×cm, 0.9-3.0 mN×cm, 0.9-2.5 mN×cm, or 0.9-2.0 mN×cm.

In some embodiments, the stiffness of the first base film in the machine (MD) direction is denoted as M₁, and M₁ can be 0.15-4.0 mN×cm. For example, it can be 0.15 mN×cm, 0.3 mN×cm, 0.5 mN×cm, 0.6 mN×cm, 0.75 mN×cm, 0.9 mN×cm, 1.0 mN×cm, 1.1 mNxcm, 1.3 mN×cm, 1.5 mN×cm, 1.8 mN×cm, 2.0 mN×cm, 2.5 mN×cm, 3.0 mN×cm, 3.5 mN×cm, 4.0 mN×cm, or a range defined by any two of the above values. Optionally, in some embodiments, the stiffness M₁ of the first base film in the machine (MD) direction can alternatively be 0.5-3.5 mN×cm, 0.5-3.0 mN×cm, 0.5-2.5 mN×cm, 0.5-2.0 mN×cm, 0.5-1.8 mN×cm, 0.6-3.5 mN×cm, 0.6-3.0 mN×cm, 0.6-2.5 mN×cm, 0.6-2.0 mN×cm, 0.6-1.8 mN×cm, 0.75-3.5 mN×cm, 0.75-3.0 mN×cm, 0.75-2.5 mN×cm, 0.75-2.0 mN×cm, or 0.75-1.8 mN×cm.

In some embodiments, for the first base film, the ratio T₁/M₁ of the stiffness T₁ in the transverse (TD) direction to the stiffness in the machine (MD) direction can be 1.0-3.0, optionally 1.1-2.0, 1.15-2.0, 1.2-2.0, 1.25-2.0, 1.1-1.8, 1.15-1.8, 1.2-1.8, 1.25-1.8, 1.1-1.75, 1.15-1.75, 1.2-1.75, 1.25-1.75, 1.1-1.7, 1.15-1.7, 1.2-1.7, or 1.25-1.7.

With the stiffness T₁ in the transverse (TD) direction, the stiffness M₁ in the machine (MD) direction, and the ratio T₁/M₁ of the two of the first base film adjusted within the above ranges, the heat resistance of the separator can be further improved, the reliability of the secondary battery can be improved, and the production yield of the secondary battery can also be improved.

In some embodiments, the stiffness of the second base film in the transverse (TD) direction is denoted as T₂, and T₂ can be 0.3-5.0 mN×cm. For example, it can be 0.3 mN×cm, 0.5 mN×cm, 0.8 mN×cm, 0.9 mN×cm, 1.1 mN×cm, 1.3 mN×cm, 1.5 mN×cm, 1.8 mN×cm, 2.0 mN×cm, 2.3 mN×cm, 2.5 mN×cm, 2.8 mN×cm, 3.0 mN×cm, 3.5 mN×cm, 4.0 mN×cm, 4.5 mN×cm, 5.0 mN×cm, or a range defined by any two of the above values. Optionally, in some embodiments, the stiffness T₂ of the second base film in the transverse (TD) direction can alternatively be 0.5-4 mN×cm, 0.5-3.5 mN×cm, 0.5-3.0 mNxcm, 0.5-2.5 mN×cm, 0.8-4 mNxcm, 0.8-3.5 mN×cm, 0.8-3.0 mN×cm, 0.8-2.5 mN×cm, 0.9-4 mN×cm, 0.9-3.5 mN×cm, 0.9-3.0 mN×cm, or 0.9-2.5 mN×cm.

In some embodiments, the stiffness of the second base film in the machine (MD) direction is denoted as M₂, and M₂ can be 0.2-4.5 mN×cm. For example, it can be 0.2 mN×cm, 0.3 mN×cm, 0.5 mN×cm, 0.6 mN×cm, 0.8 mN×cm, 0.9 mN×cm, 1.0 mN×cm, 1.1 mNxcm, 1.2 mN×cm, 1.5 mN×cm, 1.7 mN×cm, 2.1 mN×cm, 2.5 mN×cm, 3.0 mN×cm, 3.5 mN×cm, 4.0 mN×cm, 4.5 mN×cm, or a range defined by any two of the above values. Optionally, in some embodiments, the stiffness M₂ of the second base film in the machine (MD) direction can alternatively be 0.5-4.0 mNxcm, 0.5-3.5 mN×cm, 0.5-3.0 mN×cm, 0.5-2.5 mNxcm, 0.5-2.1 mNxcm, 0.6-4.0 mN×cm, 0.6-3.5 mN×cm, 0.6-3.0 mN×cm, 0.6-2.5 mN×cm, 0.6-2.1 mN×cm, 0.8-4.0 mN×cm, 0.8-3.5 mN×cm, 0.8-3.0 mN×cm, 0.8-2.5 mN×cm, or 0.8-2.1 mN×cm.

In some embodiments, for the second base film, the ratio T₂/M₂ of the stiffness in the transverse (TD) direction to the stiffness in the machine (MD) direction is 1.0-3.5, optionally 1.1-2.5, 1.15-2.5, 1.2-2.5, 1.22-2.5, 1.1-2.2, 1.15-2.2, 1.2-2.2, 1.22-2.2, 1.1-1.9, 1.15-1.9, 1.2-1.9, 1.22-1.9, 1.1-1.7, 1.15-1.7, 1.2-1.7, or 1.22-1.7.

With the stiffness T₂ in the transverse (TD) direction, the stiffness M₂ in the machine (MD) direction, and the ratio T₂/M₂ of the second base film adjusted within the above ranges, the heat resistance of the separator can be further improved, the reliability of the secondary battery can be improved, and the production yield of the secondary battery can also be improved.

The stiffnesses of the separator, the first base film, and the second base film in their respective transverse (TD) directions and the machine (MD) directions have well-known meanings in the art and can be determined by using known devices and methods. For example, the inclined plane method can be used for testing in accordance with GB/T 18318-2009 and ZB WO 4003-87. The testing instrument can be a fully automatic stiffness tester (such as the Derek DRK309 automatic fabric stiffness tester). During testing, multiple samples (for example, 12 samples) can be punched out from the separator by using a punching machine. The sample size can be 25 mm × 250 mm, with half of the samples having their long edges parallel to the transverse (TD) direction of the separator and the other half having their long edges parallel to the machine (MD) direction of the separator. The angle of the inclined plane can be 41.5°, and the feeding speed of the sample can be 4 mm/s.

The stiffness of the separator in the transverse (TD) direction can be obtained by adjusting one or more of parameters such as the stiffness of the first base film in the transverse (TD) direction, the stiffness of the second base film in the transverse (TD) direction, and the composition and thickness of the binder layer.

The stiffness of the separator in the machine (MD) direction can be obtained by adjusting one or more of parameters such as the stiffness of the first base film in the machine (MD) direction, the stiffness of the second base film in the machine (MD) direction, and the composition and thickness of the binder layer.

The stiffnesses of the first base film in the transverse (TD) direction and the machine (MD) direction can be obtained by adjusting the parameter of the first base film (such as one or more of composition, degree of orientation, average fiber diameter, crystallinity, average pore size, thickness, melting point, porosity, air permeability, and density) and/or the preparation process parameter of the first base film (such as one or more of stretching parameter, and heat setting parameter).

The stiffnesses of the second base film in the transverse (TD) direction and the machine (MD) direction can be obtained by adjusting the parameter of the second base film (such as one or more of composition, degree of orientation, average fiber diameter, crystallinity, average pore size, thickness, melting point, porosity, air permeability, and density) and/or the preparation process parameter of the second base film (such as one or more of stretching parameter, and heat setting parameter).

In some embodiments, the average fiber diameter of the first base film can be 80-300 nm, for example, 80 nm, 90 nm, 100 nm, 110 nm, 120 nm, 130 nm, 140 nm, 160 nm, 180 nm, 200 nm, 220 nm, 240 nm, 260 nm, 280 nm, 300 nm, or a range defined by any two of the above values. Optionally, in some embodiments, the average fiber diameter of the first base film can alternatively be 80-280 nm, 100-280 nm, 110-280 nm, 130-280 nm, 80-260 nm, 100-260 nm, 110-260 nm, 130-260 nm, 80-240 nm, 100-240 nm, 110-240 nm, or 130-240 nm.

In some embodiments, the average fiber diameter of the second base film can be 100-300 nm, for example, 100 nm, 110 nm, 120 nm, 130 nm, 140 nm, 150 nm, 160 nm, 180 nm, 200 nm, 220 nm, 240 nm, 260 nm, 280 nm, 300 nm, or a range defined by any two of the above values. Optionally, in some embodiments, the average fiber diameter of the second base film can alternatively be 120-280 nm, 140-280 nm, 100-260 nm, 120-260 nm, 140-260 nm, 100-240 nm, 120-240 nm, or 140-240 nm.

With the average fiber diameter of the first base film and/or the average fiber diameter of the second base film adjusted within the above ranges, the stiffnesses of the first base film, the second base film, and the separator can be adjusted, and the separator can have good heat resistance and high ionic conductivity, thereby improving the reliability of the secondary battery and enhancing the electrochemical performance such as cycling performance and kinetics performance of the secondary battery.

The average fiber diameter of the base film (such as the first base film or the second base film) has well-known meanings in the art and can be tested by using known devices and methods. For example, a scanning electron microscope (for example, ZEISS Sigma 300) is used, with reference to JY/T010-1996, to obtain a scanning electron microscope (SEM) image of the base film. Specifically, a test sample with a length × width = 5 mm × 5 mm is randomly selected on the base film. Multiple (for example, 5) test regions are randomly selected in the test sample, and the fiber diameter is clearly observed at a certain magnification (for example, 10K times). A measuring scale is used to select multiple (for example, at least 30) positions for measurement, and the average value of multiple fiber diameters is obtained, which is the average fiber diameter of the base film.

In some embodiments, the ratio of the crystallinity of the second base film to the crystallinity of the first base film can be greater than 1, for example, 1.03, 1.05, 1.1, 1.15, 1.2, 1.25, 1.3, 1.35, 1.4, 1.45, 1.5, 1.55, or a range defined by any two of the above values. Optionally, in some embodiments, the ratio of the crystallinity of the second base film to the crystallinity of the first base film can alternatively be 1.03-1.5, 1.05-1.5, 1.1-1.5, 1.15-1.5, 1.03-1.4, 1.05-1.4, 1.1-1.4, 1.15-1.4, 1.03-1.3, 1.05-1.3, 1.1-1.3, 1.15-1.3, 1.03-1.25, 1.05-1.25, 1.1-1.25, or 1.15-1.25.

The separator has the first base film face towards the negative electrode and the second base film face towards the positive electrode. Adjusting the ratio of the crystallinity of the second base film to the crystallinity of the first base film to be greater than 1 can adjust the stiffnesses of the first base film, the second base film, and the separator and is also beneficial to preparing a wound electrode assembly.

In some embodiments, the crystallinity of the first base film can be 33%-70%, 35%-65%, 35%-60%, 35%-55%, 35%-50%, or 35%-45%.

In some embodiments, the crystallinity of the second base film can be 35%-80%, optionally 35%-75%, 35%-65%, 35%-55%, 35%-50%, 40%-75%, 40%-65%, or 40%-55%.

With the crystallinity of the first base film and/or the crystallinity of the second base film adjusted within the above range, the stiffnesses of the first base film, the second base film, and the separator can be adjusted, and the separator can have good mechanical strength and elasticity, thereby helping to improve the high-temperature resistance and reliability of the secondary battery and facilitating the preparation of a wound electrode assembly.

The crystallinities of the first base film and the second base film have well-known meanings in the art and can be determined by using known devices and methods. For example, they can be determined through differential scanning calorimetry. Specifically, refer to GB/T 19466.3-2004. For example, they can be determined in the following method: 4-6 mg of the sample under test is taken to be placed in a sample chamber of a differential scanning calorimeter, the temperature is raised from 25°C to 350°C at a heating speed of 10°C/min to obtain a melting endothermic curve of the sample, and the peak area of the curve relative to the reference value of a 100% crystalline sample is calculated to obtain the crystallinity of the sample.

In some embodiments, the ratio of the thickness of the second base film to the thickness of the first base film can be greater than 1, for example, 1.01, 1.02, 1.05, 1.1, 1.2, 1.5, 2.0, 2.5, 3.0, 3.5, 4.0, 4.5, 5.0, 5.5, or a range defined by any two of the above values. Optionally, in some embodiments, the ratio of the thickness of the second base film to the thickness of the first base film can alternatively be 1.02-5.0, 1.02-4.0, 1.02-3.0, 1.02-2.5, 1.02-2.0, 1.1-5.0, 1.1-4.0, 1.1-3.0, 1.1-2.5, 1.1-2.0, 1.2-5.0, 1.2-4.0, 1.2-3.0, or 1.2-2.5.

The separator has the first base film face towards the negative electrode, and the second base film face towards the positive electrode. Adjusting the ratio of the thickness of the second base film to the thickness of the first base film to be greater than 1 can adjust the stiffnesses of the first base film, the second base film, and the separator. Additionally, the thickness of the first base film is smaller. The stretching ratio during preparation is usually larger, resulting in a higher degree of orientation and higher physical strength (for example, puncture strength). Therefore, the first base film facing towards the negative electrode can better alleviate dendrite growth and improve the reliability of the secondary battery.

In some embodiments, the thickness of the first base film can be less than or equal to 12 µm, for example, 1.5 µm, 2 µm, 2.5 µm, 3 µm, 4 µm, 5 µm, 6 µm, 7 µm, 8 µm, 9 µm, 10 µm, 11 µm, 12 µm, or a range defined by any two of the above values. Optionally, in some embodiments, the thickness of the first base film can alternatively be 1.8-12 µm, 1.8-10 µm, 1.8-8 µm, 1.8-7 µm, 1.8-6 µm, 1.8-5 µm, 2-10 µm, 2-8 µm, 2-7 µm, 2-6 µm, 2-5 µm, 2.5-10 µm, 2.5-8 µm, 2.5-7 µm, or 2.5-6 µm, 2.5-5 µm.

In some embodiments, the thickness of the second base film can be less than or equal to 14 µm, and can be 2 µm, 2.5 µm, 3 µm, 4 µm, 5 µm, 6 µm, 7 µm, 8 µm, 9 µm, 10 µm, 11 µm, 12 µm, 13 µm, 14 µm, or a range defined by any two of the above values. Optionally, in some embodiments, the thickness of the second base film can alternatively be 2-14 µm, 2-12 µm, 2-10 µm, 2-8 µm, 2-7 µm, 2-6 µm, 3-14 µm, 3-12 µm, 3-10 µm, 3-8 µm, 3-7 µm, or 3-6 µm.

Adjusting the thickness of the first base film and/or the thickness of the second base film within the above range can adjust the stiffnesses of the first base film, the second base film, and the separator and is also beneficial to high energy density of the secondary battery.

The thicknesses of the first base film and the second base film have well-known meanings in the art and can be determined by using known devices and methods. For example, six sets of parallel samples can be taken, and the thicknesses of different positions of each set of samples can be measured using a micrometer thickness gauge. At least 20 positions are measured for each set of samples, and the average thickness of the six sets of samples is taken as the thickness of the samples.

In some embodiments, the ratio of the melting point of the first base film to the melting point of the second base film can be less than 1, for example, 0.15, 0.2, 0.25, 0.3, 0.35, 0.4, 0.45, 0.5, 0.55, 0.6, 0.65, 0.7, 0.75, 0.8, 0.82, 0.85, 0.9, 0.92, 0.95, or a range defined by any two of the above values. Optionally, in some embodiments, the ratio of the melting point of the first base film to the melting point of the second base film can alternatively be 0.2-0.95, 0.25-0.95, 0.3-0.95, 0.35-0.95, 0.4-0.95, 0.2-0.92, 0.25-0.92, 0.3-0.92, 0.35-0.92, 0.4-0.92, 0.2-0.90, 0.25-0.90, 0.3-0.90, 0.35-0.90, 0.4-0.90, 0.2-0.85, 0.25-0.85, 0.3-0.85, 0.35-0.85, 0.4-0.85.

The separator has the first base film face towards the negative electrode, and the second base film face towards the positive electrode. Adjusting the ratio of the melting point of the first base film to the melting point of the second base film to be less than 1 can adjust the stiffnesses of the first base film, the second base film, and the separator. Additionally, the first base film has a lower melting point and higher physical strength (for example, puncture strength). Therefore, the first base film facing towards the negative electrode can better alleviate dendrite growth and improve the reliability of the secondary battery.

In some embodiments, the melting point of the first base film can be greater than or equal to 110°C, for example, 110°C, 115°C, 120°C, 130°C, 135°C, 140°C, 150°C, 155°C, 160°C, 165°C, 170°C, 175°C, 180°C, or a range defined by any two of the above values. Optionally, in some embodiments, the melting point of the first base film can alternatively be 120°C-180°C, 120°C-170°C, 120°C-165°C, 120°C-160°C, 120°C-155°C, 120°C-150°C, 125°C-180°C, 125°C-170°C, 125°C-165°C, 125°C-160°C, 125°C-155°C, 125°C-150°C, 135°C-180°C, 135°C-170°C, 135°C-165°C, 135°C-160°C, 135°C-155°C, or 135°C-150°C.

In some embodiments, the melting point of the second base film can be greater than or equal to 150°C, for example, 150°C, 160°C, 165°C, 170°C, 180°C, 190°C, 200°C, 220°C, 240°C, 260°C, 280°C, 300°C, 320°C, 330°C, 350°C, or a range defined by any two of the above values. Optionally, in some embodiments, the melting point of the second base film can alternatively be 165°C-330°C, 165°C-320°C, 165°C-300°C, 165°C-280°C, 170°C-330°C, 170°C-320°C, 170°C-300°C, 170°C-280°C, 180°C-330°C, 180°C-320°C, 180°C-300°C, or 180°C-280°C.

With the melting point of the first base film and/or the melting point of the second base film adjusted within the above range, the stiffnesses of the first base film, the second base film, and the separator can be adjusted, and the separator can have good pore-closing characteristics, thereby helping to improve the reliability of the secondary battery.

The melting points of the first base film and the second base film have well-known meanings in the art and can be determined by using known devices and methods. For example, they can be determined through differential scanning calorimetry. Specifically, refer to GB/T 19466.3-2004. For example, they can be determined in the following method: 4-6 mg of the sample under test is taken to be placed in a sample chamber of a differential scanning calorimeter, the temperature is raised from 25°C to 400°C at a heating speed of 10°C/min to obtain a melting endothermic curve of the sample, and the temperature corresponding to the peak of the curve is the melting point of the sample.

In some embodiments, the ratio of the average pore size of the second base film to the average pore size of the first base film can be greater than 1, for example, 1.05, 1.1, 1.2, 1.3, 1.4, 1.5, 1.6, 1.8, 2.0, 2.2, 2.5, 2.8, or a range defined by any two of the above values. Optionally, in some embodiments, the ratio of the average pore size of the second base film to the average pore size of the first base film can alternatively be 1.05-2.5, 1.05-2.2, 1.05-2, 1.05-1.8, 1.05-1.5, 1.1-2.5, 1.1-2.2, 1.1-2, 1.1-1.8, 1.1-1.5, 1.2-2.5, 1.2-2.2, 1.2-2, or 1.2-1.8.

The first base film of the separator faces towards the negative electrode, and the second base film faces towards the positive electrode. Adjusting the ratio of the average pore size of the second base film to the average pore size of the first base film to be greater than 1 can adjust the stiffnesses of the first base film, the second base film, and the separator. Additionally, the first base film with a smaller average pore size facing towards the negative electrode can better alleviate dendrite growth and can more evenly distribute ion flows from the positive electrode, thereby reducing problems such as rapid growth of dendrites and over-sharp morphology of dendrites that are caused by an excessively large ion concentration at a local position of the negative electrode, and also helping to improve the cycling performance and kinetics performance of the secondary battery.

In some embodiments, the average pore size of the first base film can be 48-1800 nm, for example, 48 nm, 55 nm, 60 nm, 80 nm, 90 nm, 100 nm, 150 nm, 180 nm, 200 nm, 220 nm, 250 nm, 300 nm, 350 nm, 400 nm, 500 nm, 600 nm, 700 nm, 800 nm, 900 nm, 1000 nm, 1200 nm, 1400 nm, 1600 nm, 1800 nm, or a range defined by any two of the above values. Optionally, in some embodiments, the average pore size of the first base film can alternatively be 50-1400 nm, 60-1400 nm, 70-1400 nm, 80-1400 nm, 50-1000 nm, 60-1000 nm, 70-1000 nm, 80-1000 nm, 50-600 nm, 60-600 nm, 70-600 nm, 80-600 nm, 50-300 nm, 60-300 nm, 70-300 nm, 80-300 nm, 50-200 nm, 60-200 nm, 70-200 nm, or 80-200 nm.

In some embodiments, the average pore size of the second base film can be 50-2000 nm, for example, 50 nm, 60 nm, 80 nm, 90 nm, 100 nm, 150 nm, 180 nm, 200 nm, 220 nm, 250 nm, 300 nm, 350 nm, 400 nm, 500 nm, 600 nm, 700 nm, 800 nm, 900 nm, 1000 nm, 1200 nm, 1400 nm, 1600 nm, 1800 nm, 2000 nm, or a range defined by any two of the above values. Optionally, in some embodiments, the average pore size of the second base film can also be 60-1600 nm, 80-1600 nm, 100-1600 nm, 120-1600 nm, 60-1200 nm, 80-1200 nm, 100-1200 nm, 120-1200 nm, 60-800 nm, 80-800 nm, 100-800 nm, 120-800 nm, 60-400 nm, 80-400 nm, 100-400 nm, 120-400 nm, 60-300 nm, 80-300 nm, 100-300 nm, or 120-300 nm.

With the average pore size of the first base film and/or the average pore size of the second base film adjusted within the above range, the stiffnesses of the first base film, the second base film, and the separator can be adjusted; the first base film and the second base film can better alleviate dendrite growth and improve the reliability of the secondary battery; and the separator can also have good ionic conductivity, thereby helping to improve the cycling performance, kinetics performance, and the like of the secondary battery.

The average pore sizes of the first base film and the second base film have well-known meanings in the art and can be determined by using known devices and methods. For example, a mercury porosimeter can be used for testing in accordance with GB/T 21650.1-2008.

In some embodiments, the ratio of the porosity of the second base film to the porosity of the first base film can be greater than 1, for example, 1.01, 1.05, 1.1, 1.2, 1.3, 1.4, 1.5, 1.6, 1.7, 1.8, 1.9, 2.0, 2.1, 2.2, 2.3, 2.4, 2.5, 2.6, 2.7, 2.8, 2.9, or a range defined by any two of the above values. Optionally, in some embodiments, the ratio of the porosity of the second base film to the porosity of the first base film can alternatively be 1.01-2.8, 1.05-2.8, 1.1-2.8, 1.2-2.8, 1.3-2.8, 1.01-2.4, 1.05-2.4, 1.1-2.4, 1.2-2.4, 1.3-2.4, 1.01-2.0, 1.05-2.0, 1.1-2.0, 1.2-2.0, or 1.3-2.0.

The first base film of the separator faces towards the negative electrode, and the second base film faces towards the positive electrode. Adjusting the ratio of the porosity of the second base film to the porosity of the first base film to be greater than 1 can adjust the stiffnesses of the first base film, the second base film, and the separator. Additionally, the first base film with a smaller porosity facing towards the negative electrode can better alleviate dendrite growth and improve the reliability of the secondary battery.

In some embodiments, the porosity of the first base film can be 28%-70%, for example, 28%, 30%, 32%, 35%, 38%, 40%, 42%, 45%, 48%, 50%, 52%, 55%, 58%, 60%, 65%, 70%, or a range defined by any two of the above values. Optionally, in some embodiments, the porosity of the first base film can alternatively be 30%-70%, 30%-60%, 30%-55%, 30%-52%, 30%-50%, 32%-70%, 32%-60%, 32%-55%, 32%-52%, or 32%-50%.

In some embodiments, the porosity of the second base film can be 30%-80%, for example, 30%, 33%, 35%, 40%, 45%, 50%, 55%, 60%, 65%, 70%, 75%, 80%, or a range defined by any two of the above values. Optionally, in some embodiments, the porosity of the second base film can alternatively be 33%-80%, 33%-75%, 33%-70%, 33%-65%, 33%-60%, 33%-55%, 35%-80%, 35%-75%, 35%-70%, 35%-65%, 35%-60%, or 35%-55%.

Adjusting the porosity of the first base film and/or the porosity of the second base film within the above range can adjust the stiffnesses of the first base film, the second base film, and the separator and can provide the separator with good ionic conductivity, thereby also helping to improve the cycling performance, kinetics performance, and the like of the secondary battery.

In some embodiments, the porosity of the separator can be 27%-65%, optionally 33%-55%.

The porosities of the separator, the first base film, and the second base film have well-known meanings in the art and can be determined by using known devices and methods. For example, a mercury porosimeter can be used for testing in accordance with GB/T 21650.1-2008.

In some embodiments, the ratio of the air permeability of the first base film to the air permeability of the second base film can be greater than 1, for example, 1.05, 1.08, 1.1, 1.15, 1.2, 1.3, 1.4, 1.5, 1.6, 1.7, 1.8, 1.9, 2.0, 2.2, 2.4, 2.6, 2.8, 3.0, or a range defined by any two of the above values. Optionally, in some embodiments, the ratio of the air permeability of the first base film to the air permeability of the second base film can alternatively be 1.05-3.0, 1.05-2.6, 1.05-2.4, 1.05-2.2, 1.05-2.0, 1.08-3.0, 1.08-2.6, 1.08-2.4, 1.08-2.2, 1.1-3.0, 1.1-2.6, 1.1-2.4, 1.1-2.2, 1.1-2.0, 1.2-3.0, 1.2-2.6, 1.2-2.4, 1.2-2.2, or 1.2-2.0.

The first base film of the separator faces towards the negative electrode, and the second base film faces towards the positive electrode. Adjusting the ratio of the air permeability of the first base film to the air permeability of the second base film to be greater than 1 can adjust the stiffnesses of the first base film, the second base film, and the separator. Additionally, the first base film with a larger air permeability facing towards the negative electrode can better alleviate dendrite growth and improve the reliability of the secondary battery.

In some embodiments, the air permeability of the first base film can be less than or equal to 300 s/100 cc, for example, 110 s/100 cc, 120 s/100 cc, 140 s/100 cc, 160 s/100 cc, 180 s/100 cc, 200 s/100 cc, 220 s/100 cc, 240 s/100 cc, 260 s/100 cc, 280 s/100 cc, 300 s/100 cc, or a range defined by any two of the above values. Optionally, in some embodiments, the air permeability of the first base film can alternatively be 110-300 s/100 cc, 110-280 s/100 cc, 110-260 s/100 cc, 110-240 s/100 cc, 120-300 s/100 cc, 120-280 s/100 cc, 120-260 s/100 cc, or 120-240 s/100 cc.

In some embodiments, the air permeability of the second base film can be less than or equal to 250 s/100 cc, for example, 100 s/100 cc, 110 s/100 cc, 120 s/100 cc, 140 s/100 cc, 160 s/100 cc, 180 s/100 cc, 200 s/100 cc, 220 s/100 cc, 230 s/100 cc, 250 s/100 cc, or a range defined by any two of the above values. Optionally, in some embodiments, the air permeability of the second base film can alternatively be 100-250 s/100 cc, 100-230 s/100 cc, 100-220 s/100 cc, 100-200 s/100 cc, 110-230 s/100 cc, 110-220 s/100 cc, or 110-200 s/100 cc.

Adjusting the air permeability of the first base film and/or the air permeability of the second base film within the above range can adjust the stiffnesses of the first base film, the second base film, and the separator and can provide the separator with good ionic conductivity, thereby also helping to improve the cycling performance, kinetics performance, and the like of the secondary battery.

The air permeabilities of the separator, the first base film, and the second base film have well-known meanings in the art and can be determined by using known devices and methods. For example, the testing can be performed in accordance with GB/T 36363-2018. The test gas can be 100 cc of air.

The term "air permeability" refers to a test result of the breathability of the film. A larger air permeability of the film means a poorer breathability.

In some embodiments, the first base film and the second base film may each independently include one or more of polyolefin and a derivative thereof, halogenated polyolefin and a derivative thereof, polyether and a derivative thereof, polyether ether ketone and a derivative thereof, polyester and a derivative thereof, polyimide (PI) and a derivative thereof, and polyvinyl alcohol and a derivative thereof.

Optionally, polyolefin and a derivative thereof can include one or more of polyethylene (PE) and a derivative thereof, and polypropylene (PP) and a derivative thereof.

Optionally, the halogenated polyolefin and a derivative thereof may include one or more of polytetrafluoroethylene (PTFE) and a derivative thereof, polyvinyl fluoride and a derivative thereof, and polyvinylidene fluoride and a derivative thereof.

Optionally, the polyester and a derivative thereof may include one or more of polyethylene terephthalate (PET) and a derivative thereof, and polybutylene terephthalate (PBT) and a derivative thereof.

A derivative usually refers to a product derived by substituting a hydrogen atom or atom group in a polymer with another atom or atom group.

In some embodiments, the binding layer includes a binder. The binder can ensure the adhesion strength and uniformity of the first base film and the second base film, and impart good heat resistance to the separator, thereby helping to improve the reliability of the secondary battery.

In some embodiments, the binder may include one or more of polyacrylate, polyacrylic acid, polytetrafluoroethylene, polyvinylidene fluoride, vinylidene fluoride-trichloroethylene copolymer, polyvinyl pyrrolidone, polyvinyl acetate, ethylene-vinyl acetate copolymer, polyethylene oxide, polyarylate, carboxymethyl cellulose, hydroxypropyl cellulose, regenerated cellulose, cellulose acetate, cellulose acetate propionate, cellulose acetate butyrate, polyacrylonitrile, polyvinyl alcohol, polyethylene, polypropylene, starch, and cyanoethyl branched starch.

In some embodiments, the binding layer can include a binder and a filler. The filler can further improve the heat resistance and physical performance (for example, puncture strength) of the separator, thereby helping to improve the reliability of the secondary battery. Additionally, the filler is located between the first base film and the second base film, thereby reducing issues such as powder shedding.

For example, in some embodiments, the filler can include at least one of inorganic particle, organic particle, and organic-metal framework material.

Optionally, the inorganic particle may include one or more of inorganic particle with a dielectric constant above 5, inorganic particle with ionic conductivity but not storing an ion, and inorganic particle capable of undergoing an electrochemical reaction.

Optionally, the inorganic particle with a dielectric constant above 5 includes at least one of boehmite, aluminum oxide, zinc oxide, silicon oxide, titanium oxide, zirconium oxide, barium oxide, calcium oxide, magnesium oxide, nickel oxide, tin oxide, cerium oxide, yttrium oxide, hafnium oxide, aluminum hydroxide, magnesium hydroxide, silicon carbide, boron carbide, aluminum nitride, silicon nitride, boron nitride, magnesium fluoride, calcium fluoride, barium fluoride, barium sulfate, magnesium aluminum silicate, lithium magnesium silicate, sodium magnesium silicate, bentonite, hectorite, zirconium titanate, barium titanate, Pb(Zr,Ti)O₃ (PZT for short), Pb₁₋ₘLaₘZr₁₋ₙTiₙO₃ (PLZT for short, where 0<m<1, and 0<n<1), Pb(Mg₃Nb_{2/3})O₃-PbTiO₃ (PMN-PT for short), and their respective modified inorganic particles. Optionally, a modification method for the inorganic particles may be chemical modification and/or physical modification. The chemical modification method includes coupling agent modification (for example, using a silane coupling agent, a titanate coupling agent, and the like), surfactant modification, polymer graft modification, and the like. The physical modification method may include mechanical force dispersion, ultrasonic dispersion, high-energy treatment, and the like. Modification treatment can reduce agglomeration of inorganic particles, thereby enabling the binding layer to have a more stable and uniform structure. Additionally, selecting a coupling agent, a surfactant, or a polymer with a specific functional group to modify the inorganic particles further helps to enhance the wetting and retention properties of the binding layer to the electrolyte, and improve the adhesion of the binding layer to the first base film and the second base film.

Optionally, the inorganic particle with ionic conductivity but not storing ions includes at least one of Li₃PO₄, lithium titanium phosphate Liₓ₁Ti_{y1}(PO₄)₃, lithium aluminum titanium phosphate Liₓ₂Al_{y2}Ti_{z1}(PO₄)₃, (LiAlTiP)ₓ₃O_{y3} type glass, lithium lanthanum titanate Liₓ₄La_{y4}TiO₃, lithium germanium thiophosphate Liₓ₅Ge_{y5}P_{z2}S_{w}, lithium nitride Liₓ₆N_{y6}, SiS₂ type glass Liₓ₇Si_{y7}S_{z3}, and P₂S₅ type glass Liₓ₈P_{y8}S_{z4}, where 0 < x1 < 2, 0 < y1 < 3, 0 < x2 < 2, 0 < y2 < 1, 0 < z1 < 3, 0 < x3 < 4, 0 < y3 < 13, 0 < x4 < 2, 0 < y4 < 3, 0 < x5 < 4, 0 < y5 < 1, 0 < z2 < 1, 0 < w < 5, 0 < x6 < 4, 0 < y6 < 2, 0 < x7 < 3, 0 < y7 < 2, 0 < z3 < 4, 0 < x8 < 3, 0 < y8 < 3, and 0 < z4 < 7. In this way, the ionic conductivity of the separator can be further enhanced.

Optionally, the inorganic particle capable of electrochemical reactions includes at least one of lithium-containing transition metal oxide, lithium-containing phosphate, a carbon-based material, a silicon-based material, a tin-based material, and a lithium titanium compound.

Optionally, the organic particle may include one or more of polycarbonate, polythiophene, polypyridine, polystyrene, polyacrylic wax, polyethylene, polypropylene, cellulose, cellulose modifier (for example, carboxymethyl cellulose), melamine resin, phenolic resin, polyester (for example, polyethylene terephthalate, polyethylene naphthalate, polybutylene terephthalate), silicone resin, polyimide, polyamide-imide, polyaromatic amid, polyphenylene sulfide, polysulfone, polyether sulfone, polyether ether ketone, polyarylether ketone, and copolymer of butyl acrylate and ethyl methacrylate (for example, crosslinked polymer of butyl acrylate and ethyl methacrylate).

Optionally, the organic-metal framework material may include one or more of nitrogen-containing heterocyclic ligand assembly structure, organic carboxylic acid ligand assembly structure, and nitrogen-oxygen mixed ligand assembly structure.

In some embodiments, the percentage of the binder may be greater than or equal to 10%, optionally 10%-30%, based on the total weight of the binding layer.

In some embodiments, the percentage of the filler may be less than or equal to 90%, optionally 40%-90%, 60%-80%, based on the total weight of the binding layer.

In some embodiments, the binding layer may further include a dispersant, such as carboxymethyl cellulose, thereby adjusting the viscosity of the binding layer slurry and improving the quality and uniformity of the binding layer.

In some embodiments, the percentage of the dispersant may be less than or equal to 25%, optionally less than or equal to 20%, based on the total weight of the binding layer.

In some embodiments, the thickness of the binding layer may be greater than or equal to 0.3 µm, optionally 0.5-4 µm. When the thickness of the binding layer is within the above range, the separator can have an appropriate thickness, and the separator can also have good heat resistance and physical strength, thereby improving the reliability of the secondary battery.

For the test method for the thickness of the binding layer, reference can be made to the test method for the thickness of the first base film and the second base film.

In some embodiments, a surface density of the binding layer may be 1.0-6.0 g/m², optionally 1.2-5.0 g/m².

In some embodiments, a binding strength between the binding layer and the first base film may be greater than or equal to 3 N/m, optionally 4-15 N/m.

In some embodiments, a binding strength between the binding layer and the second base film may be greater than or equal to 3 N/m, optionally 4-15 N/m.

This can prevent the binding layer from separating from the first base film and the second base film, thereby helping to improve the reliability of the secondary battery.

In some embodiments, a volume distribution particle size Dᵥ50 of the filler may be less than or equal to 1.5 µm, optionally 0.1-1.4 µm, 0.15-1.0 µm, 0.2-0.8 nm, or 0.3-0.7 nm.

In some embodiments, a transverse (TD) tensile strength of the separator may be greater than or equal to 700 kg/cm², optionally greater than or equal to 1000 kg/cm².

In some embodiments, a machine (MD) tensile strength of the separator may be greater than or equal to 1000 kg/cm², optionally greater than or equal to 1200 kg/cm².

In some embodiments, a transverse (TD) thermal shrinkage of the separator at 250°C for 1 h may be less than or equal to 5%, optionally less than or equal to 2%.

In some embodiments, a machine (MD) thermal shrinkage of the separator at 250°C for 1 h may be less than or equal to 5%, optionally less than or equal to 2%.

When at least one of the transverse tensile strength, machine tensile strength, transverse thermal shrinkage, and machine thermal shrinkage of the separator meets the given range, the separator can have good heat resistance and physical strength, thereby helping to improve the reliability of the secondary battery.

The transverse tensile strength, machine tensile strength, transverse thermal shrinkage, and machine thermal shrinkage of the separator all have well-known meanings in the art and can be determined by using known devices and methods. For example, they can all be tested in accordance with GB/T 36363-2018.

### [Preparation method]

An embodiment of this application further provides a method for preparing the separator provided in the embodiments of this application.

The method includes the following steps: providing a first base film and a second base film; providing a binding layer slurry, where the binding layer slurry includes a binder; applying the binding layer slurry on the first base film and/or the second base film; and laminating the first base film and the second base film to obtain a separator.

The first base film and the second base film are laminated by using the binding layer slurry, which is a simple process that can further improve the heat resistance and physical strength of the separator, thereby helping to improve the reliability of the secondary battery. Laminating the first base film and the second base film by using the binding layer slurry can also avoid process defects caused during direct hot pressing lamination of the first base film and the second base film. During the direct hot pressing lamination of the first base film and the second base film, the applied force is usually at the MPa level. Additionally, if the applied temperature is too high, the porosity of the separator decreases and the breathability thereof deteriorates. If the applied temperature is too low, poor adhesion between the first base film and the second base film is caused. Therefore, an appropriate hot pressing temperature needs to be selected, leading to stringent conditions for direct hot pressing.

In some embodiments, the binding layer slurry can further include a filler. Optionally, the filler may include at least one of inorganic particle, organic particle, and organic-metal framework material.

In some embodiments, the solid content of the binding layer slurry may be 35%-50%.

In some embodiments, the viscosity of the binding layer slurry may be 250-380 mPa·s.

In some embodiments, the coating speed of the binding layer slurry may be greater than 50 m/min.

In some embodiments, the method for providing the first base film or the second base film may include commercial purchase.

In some embodiments, the method for providing the first base film may include the steps: providing raw materials for forming the first base film, and melting, extruding, stretching, and heat setting the raw materials to obtain the first base film.

In some embodiments, in the step of providing the first base film, the machine (MD) stretching ratio may be 8-12 times.

In some embodiments, in the step of providing the first base film, the transverse (TD) stretching ratio may be 2-6 times.

In some embodiments, in the step of providing the first base film, the heat setting temperature may be 100°C-160°C.

In some embodiments, in the step of providing the first base film, the heat setting time may be 20-60 seconds.

Adjusting the preparation parameter of the first base film, such as the stretching parameter and heat setting parameter can adjust the stiffness of the first base film.

In some embodiments, the method for providing the second base film may include the steps: providing raw materials for forming the second base film, and melting, extruding, stretching, and heat setting the raw materials to obtain the second base film.

In some embodiments, in the step of providing the second base film, the machine (MD) stretching ratio may be 5-15 times.

In some embodiments, in the step of providing the second base film, transverse (TD) stretching treatment may be performed or may not be performed. When the transverse (TD) stretching treatment is performed, the stretching ratio may be 1.5-6 times.

In some embodiments, in the step of providing the second base film, the heat setting temperature may be 80°C-130°C.

In some embodiments, in the step of providing the second base film, the heat setting time may be 30-60 seconds.

Adjusting the preparation parameter of the second base film, such as the stretching parameter and heat setting parameter can adjust the stiffness of the second base film.

In some embodiments, the coating method of the binding layer slurry may be transfer coating, rotary spraying, dipping, or the like, which is not limited in the embodiments of this application.

Unless otherwise specified, the raw materials used in the preparation method of the separator (for example, the first base film, the second base film, the binder, and the filler) can all be commercially obtained.

### Secondary battery

Embodiments of this application further provide a secondary battery.

The secondary battery, also referred to as a rechargeable battery or a storage battery, is a battery that can be charged after being discharged to activate active materials for continuous use. Typically, a secondary battery includes an electrode assembly and an electrolyte. The electrode assembly includes a positive electrode plate, a negative electrode plate, and a separator. The separator is disposed between the positive electrode plate and the negative electrode plate, mainly to prevent a short circuit between the positive electrode and the negative electrode and allow active ions to pass through freely to form a closed loop.

This application does not particularly limit the type of the secondary battery. For example, the secondary battery may be a lithium-ion battery, a sodium-ion battery, a lithium metal battery, a sodium metal battery, a lithium-air battery, a sodium-air battery, a lithium-sulfur battery, or a sodium-sulfur battery. Particularly, the secondary battery may be a lithium-ion battery or a sodium-ion battery.

The secondary battery provided in the embodiments of this application includes the foregoing separator or a separator prepared by using the foregoing method. The separator can improve the production yield of the secondary battery and can also enhance the reliability of the secondary battery.

In some embodiments, the secondary battery includes a positive electrode plate and a negative electrode plate. A separator is disposed between the positive electrode plate and the negative electrode plate, and a first base film of the separator faces towards (that is, close to) the negative electrode plate, and a second base film of the separator faces towards (that is, close to) the positive electrode plate.

### [Positive electrode plate]

The composition and structure of the positive electrode plate can be selected according to the type of the secondary battery. This is not limited in the embodiments of this application.

In some embodiments, the positive electrode plate can include a positive electrode current collector and a positive electrode film layer disposed on at least one surface of the positive electrode current collector and including a positive electrode active material. For example, the positive electrode current collector has two opposite surfaces in its thickness direction, and the positive electrode film layer is provided on either or both of the two opposite surfaces of the positive electrode current collector.

The type of the positive electrode active material can be selected according to the type of the secondary battery. This is not limited in the embodiments of this application.

For example, when the secondary battery is a lithium-ion battery, the positive electrode active material may include but is not limited to at least one of lithium transition metal oxide, lithium-containing phosphate, and their respective modified compounds. The example of the lithium-containing transition metal oxide may include but is not limited to at least one of lithium cobalt oxide, lithium nickel oxide, lithium manganese oxide, lithium nickel cobalt oxide, lithium manganese cobalt oxide, lithium nickel manganese oxide, lithium nickel cobalt manganese oxide, lithium nickel cobalt aluminum oxide, and their respective modified compounds. The example of the lithium-containing phosphate may include but is not limited to at least one of lithium iron phosphate, a composite material of lithium iron phosphate and carbon, lithium manganese phosphate, a composite material of lithium manganese phosphate and carbon, lithium manganese iron phosphate, a composite material of lithium manganese iron phosphate and carbon, and their respective modified compounds.

In some embodiments, to further increase the energy density of the secondary battery, the positive electrode active material for the lithium-ion battery may include at least one of lithium transition metal oxide with a general formula LiₐNi_{b}Co_{c}M_{d}OₑA_{f} and modified compounds, where 0.8≤a≤1.2, 0.5≤b<1, 0<c<1, 0<d<1, 1≤e≤2, 0≤f≤1, M includes at least one of Mn, Al, Zr, Zn, Cu, Cr, Mg, Fe, V, Ti, and B, and A includes at least one of N, F, S, and Cl.

For example, the positive electrode active material for lithium-ion batteries may include at least one of LiCoO₂, LiNiO₂, LiMnO₂, LiMn₂O₄, LiNi_{1/3}Co_{1/3}Mn_{1/3}O₂ (NCM333), LiNi_{0.5}Co_{0.2}Mn_{0.3}O₂ (NCM523), LiNi_{0.6}Co_{0.2}Mn_{0.2}O₂ (NCM622), LiNi_{0.8}Co_{0.1}Mn_{0.1}O₂ (NCM811), LiNi_{0.85}Co_{0.15}Al_{0.05}O₂, LiFePO₄, and LiMnPO₄.

For example, when the secondary battery is a sodium-ion battery, the positive electrode active material may include but is not limited to at least one of sodium transition metal oxide, polyanionic material (such as phosphate, fluorophosphate, pyrophosphate, and sulfate), and Prussian blue material.

For example, the positive electrode active material for sodium-ion batteries may include at least one of NaFeO₂, NaCoO₂, NaCrO₂, NaMnO₂, NaNiO₂, NaNi_{1/2}Ti_{1/2}O₂, NaNi_{1/2}Mn_{1/2}O₂, Na_{2/3}Fe_{1/3}Mn_{2/3}O₂, NaNi_{1/3}Co_{1/3}Mn_{1/3}O₂, NaFePO₄, NaMnPO₄, NaCoPO₄, a Prussian blue material, and a material with a general formula XₚM'_{q}(PO₄)ᵣOₓY₃₋ₓ. In the general formula XₚM'_{q}(PO₄)ᵣOₓY₃₋ₓ, 0<p≤4, 0<q≤2, 1≤r≤3, 0≤x≤2, X includes at least one of H⁺, Li⁺, Na⁺, K⁺, and NH₄⁺, M' includes a transition metal cation, optionally at least one of V, Ti, Mn, Fe, Co, Ni, Cu, and Zn, and Y includes a halogen anion, optionally at least one of F, Cl, and Br.

The modified compounds of the foregoing positive electrode active materials may be modified by doping and/or surface coating on the positive electrode active material.

In some embodiments, the positive electrode film layer further optionally includes a positive electrode conductive agent. The positive electrode conductive agent is not limited to a particular type in this application. For example, the positive electrode conductive agent includes at least one of superconducting carbon, conductive graphite, acetylene black, carbon black, Ketjen black, carbon dots, carbon nanotubes, graphene, and carbon nanofiber.

In some embodiments, the positive electrode film layer may optionally include a positive electrode binder. The positive electrode binder is not limited to a particular type in this application. For example, the positive electrode binder may include at least one of poly(vinylidene difluoride) (PVDF), polytetrafluoroethylene (PTFE), vinylidene fluoride-tetrafluoroethylene-propylene terpolymer, vinylidene fluoride-hexafluoropropylene-tetrafluoroethylene terpolymer, tetrafluoroethylene-hexafluoropropylene copolymer, and fluorine-containing acrylic resin.

In some embodiments, the positive electrode current collector may be a metal foil or a composite current collector. For example, an aluminum foil may be used as the metal foil. The composite current collector may include a polymer material matrix and a metal material layer formed on at least one surface of the polymer material matrix. For example, the metal material may include at least one of aluminum, aluminum alloy, nickel, nickel alloy, titanium, titanium alloy, silver, and silver alloy. For example, the polymer material matrix may include at least one of polypropylene (PP), polyethylene terephthalate (PET), polybutylene terephthalate (PBT), polystyrene (PS), and polyethylene (PE).

The positive electrode film layer is typically formed by applying a positive electrode slurry onto the positive electrode current collector, followed by drying and cold pressing. The positive electrode slurry is typically formed by dispersing the positive electrode active material, the optional conductive agent, the optional binder, and any other components in a solvent and stirring them to uniformity. The solvent may be N-methylpyrrolidone (NMP), but is not limited thereto.

### [Negative electrode plate]

The composition and structure of the negative electrode plate can be selected according to the type of the secondary battery. This is not limited in the embodiments of this application.

In some embodiments, the negative electrode plate may include a negative electrode current collector and a negative electrode film layer disposed on at least one surface of the negative electrode current collector and including a negative electrode active material. For example, the negative electrode current collector includes two opposite surfaces in its thickness direction, and the negative electrode film layer is disposed on either or both of the two opposite surfaces of the negative electrode current collector.

The negative electrode active material may be a negative electrode active material for secondary batteries well known in the art. For example, the negative electrode active material may include but is not limited to at least one of natural graphite, artificial graphite, soft carbon, hard carbon, silicon-based material, tin-based material, and lithium titanate. The silicon-based material may include at least one of elemental silicon, silicon oxide, silicon-carbon composite, silicon-nitrogen composite, and silicon alloy material. The tin-based material may include at least one of elemental tin, tin oxide, and tin alloy material.

In some embodiments, the negative electrode film layer optionally includes a negative electrode conductive agent. The negative electrode conductive agent is not limited to a particular type in this application. For example, the negative electrode conductive agent may include at least one of superconducting carbon, conductive graphite, acetylene black, carbon black, Ketjen black, carbon dots, carbon nanotubes, graphene, and carbon nanofiber.

In some embodiments, the negative electrode film layer optionally includes a negative electrode binder. The negative electrode binder is not limited to a particular type in this application. For example, the negative electrode binder may include at least one of styrene-butadiene rubber (SBR), water-soluble unsaturated resin SR-1B, waterborne acrylic resin (for example, polyacrylic acid PAA, polymethylacrylic acid PMAA, and polyacrylic acid sodium PAAS), polyacrylamide (PAM), polyvinyl alcohol (PVA), sodium alginate (SA), and carboxymethyl chitosan (CMCS).

In some embodiments, the negative electrode film layer optionally includes another additive. For example, the another additive may include a thickener, for example, sodium carboxymethyl cellulose (CMC) or PTC thermistor material.

In some embodiments, the negative electrode current collector may be a metal foil or a composite current collector. For example, a copper foil may be used as the metal foil. The composite current collector may include a polymer material matrix and a metal material layer formed on at least one surface of the polymer material matrix. For example, the metal material may include at least one of copper, copper alloy, nickel, nickel alloy, titanium, titanium alloy, silver, and silver alloy. For example, the polymer material matrix may include at least one of polypropylene (PP), polyethylene terephthalate (PET), polybutylene terephthalate (PBT), polystyrene (PS), and polyethylene (PE).

The negative electrode film layer is typically formed by applying a negative electrode slurry onto the negative electrode current collector, followed by drying and cold pressing. The negative electrode slurry is typically formed by dispersing the negative electrode active material, the optional conductive agent, the optional binder, and the optional another additive in a solvent and stirring them to uniformity. The solvent may be but is not limited to N-methylpyrrolidone (NMP) or deionized water.

The negative electrode plate does not exclude additional functional layers other than the negative electrode film layer. For example, in some embodiments, the negative electrode plate further includes a conductive primer layer (for example, including a conductive agent and a binder) that is sandwiched between the negative electrode current collector and the negative electrode film layer and that is disposed on a surface of the negative electrode current collector. In some embodiments, the negative electrode plate of this application further includes a protection layer covering the surface of the negative electrode film layer.

### [Electrolyte]

In a charge and discharge process of the secondary battery, active ions intercalate and deintercalate between the positive electrode plate and the negative electrode plate. The electrolyte is between the positive electrode plate and the negative electrode plate to mainly conduct active ions. The electrolyte is not specifically limited to any particular type in this application, and may be selected depending on actual needs.

The electrolyte includes an electrolytic salt and a solvent. The electrolytic salt and solvent are not specifically limited to any types, and may be selected depending on actual needs.

For example, when the secondary battery in this application is a lithium-ion battery, for example, the electrolytic salt may include but is not limited to at least one of lithium hexafluorophosphate (LiPF₆), lithium tetrafluoroborate (LiBF₄), lithium perchlorate (LiClO₄), lithium hexafluoroarsenate (LiAsF₆), lithium bis(fluorosulfonyl)imide (LiFSI), lithium bistrifluoromethanesulfonimide (LiTFSI), lithium trifluoromethanesulfonate (LiTFS), lithium difluoro(oxalato)borate (LiDFOB), lithium dioxalate borate (LiBOB), lithium difluorophosphate (LiPO₂F₂), lithium difluoro(dioxalato)phosphate (LiDFOP), and lithium tetrafluoro oxalato phosphate (LiTFOP).

For example, when the secondary battery in this application is a sodium-ion battery, for example, the electrolytic salt may include but is not limited to at least one of sodium hexafluorophosphate (NaPF₆), sodium tetrafluoroborate (NaBF₄), sodium perchlorate (NaClO₄), sodium hexafluoroarsenate (NaAsF₆), sodium bis(fluorosulfonyl)imide (NaFSI), sodium bistrifluoromethanesulfonimide (NaTFSI), sodium trifluoromethanesulfonate (NaTFS), sodium difluoro(oxalato)borate (NaDFOB), sodium dioxalate borate (NaBOB), sodium difluorophosphate (NaPO₂F₂), sodium difluoro(dioxalato)phosphate (NaDFOP), and sodium tetrafluoro oxalato phosphate (NaTFOP).

For example, the solvent may include but is not limited to at least one of ethylene carbonate (EC), propylene carbonate (PC), ethyl methyl carbonate (EMC), diethyl carbonate (DEC), dimethyl carbonate (DMC), dipropyl carbonate (DPC), methyl propyl carbonate (MPC), ethyl propyl carbonate (EPC), butylene carbonate (BC), fluoroethylene carbonate (FEC), methyl formate (MF), methyl acetate (MA), ethyl acetate (EA), propyl acetate (PA), methyl propionate (MP), ethyl propionate (EP), propyl propionate (PP), methyl butyrate (MB), ethyl butyrate (EB), 1,4-gamma-butyrolactone (GBL), sulfolane (SF), methyl sulfonyl methane (MSM), ethyl methyl sulfone (EMS), and diethyl sulfone (ESE).

In some embodiments, the electrolyte further optionally includes an additive. For example, the additive may include a negative electrode film-forming additive, or may include a positive electrode film-forming additive, or may include an additive that can improve some performance of a battery, for example, an additive for improving overcharge performance of the battery, an additive for improving high-temperature performance of the battery, or an additive for improving low-temperature performance of the battery.

In some embodiments, the positive electrode plate, the separator, and the negative electrode plate may be made into an electrode assembly through winding and/or lamination.

In some embodiments, the secondary battery may include an outer package. The outer package may be used for packaging the electrode assembly and the electrolyte.

In some embodiments, the outer package of the secondary battery may be a hard shell, for example, a hard plastic shell, an aluminum shell, or a steel shell. The outer package of the secondary battery may alternatively be a soft pack, for example, a soft pouch. A material of the soft pack may be plastic, for example, at least one of polypropylene (PP), polybutylene terephthalate (PBT), and polybutylene succinate (PBS).

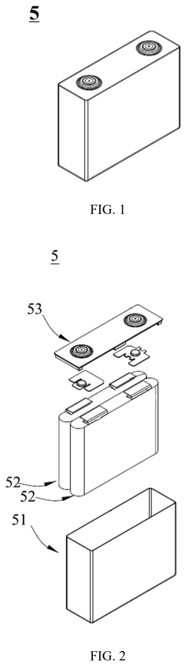

The secondary battery is not limited to any particular shape in this application, and may be cylindrical, rectangular, or in any other shapes. FIG. 1 shows a rectangular secondary battery 5 as an example.

In some embodiments, as shown in FIG. 2, the outer package may include a housing 51 and a cover plate 53. The housing 51 may include a base plate and side plates connected to the base plate, and the base plate and the side plates enclose an accommodating cavity. The housing 51 has an opening communicating with the accommodating cavity, and the cover plate 53 is configured to cover the opening to close the accommodating cavity. The positive electrode plate, the negative electrode plate, and the separator may be made into an electrode assembly 52 through winding and/or lamination. The electrode assembly 52 is packaged in the accommodating cavity. The electrolyte infiltrates the electrode assembly 52. The secondary battery 5 may include one or more electrode assemblies 52 whose quantity is adjustable as required.

The preparation method of the secondary battery is well known. In some embodiments, the positive electrode plate, the separator, the negative electrode plate, and the non-aqueous electrolyte may be assembled to form a secondary battery. For example, the positive electrode plate, the separator, and the negative electrode plate may be made into an electrode assembly through winding and/or lamination; and the electrode assembly is put in an outer package which is filled with electrolyte after drying, followed by processes such as vacuum packaging, standing, formation, and shaping, to obtain a secondary battery.

In some embodiments, such secondary batteries of this application may be assembled into a battery module. The battery module may include a plurality of secondary batteries, and a specific quantity may be adjusted based on application and capacity of the battery module.

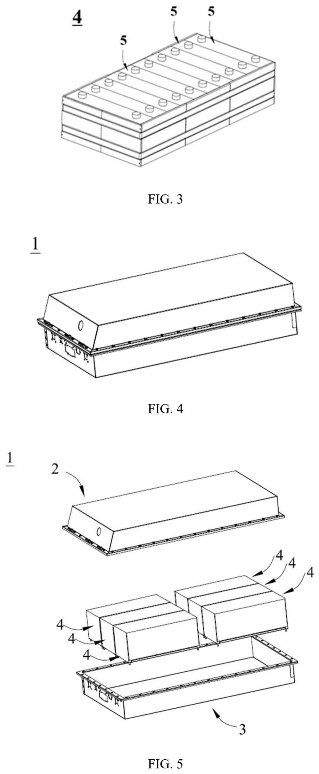

FIG. 3 is a schematic diagram of a battery module 4 as an example. As shown in FIG. 3, in the battery module 4, a plurality of secondary batteries 5 may be sequentially arranged along a length direction of the battery module 4. Certainly, the batteries may alternatively be arranged in any other manners. Further, the plurality of secondary batteries 5 may be fastened by using fasteners.

Optionally, the battery module 4 may further include a case with an accommodating space, and the plurality of secondary batteries 5 are accommodated in the accommodating space.

In some embodiments, the battery modules may be further assembled into a battery pack, and a quantity of battery modules included in the battery pack may be adjusted based on application and capacity of the battery pack.

FIG. 4 and FIG. 5 are schematic diagrams of a battery pack 1 as an example. As shown in FIG. 4 and FIG. 5, the battery pack 1 may include a battery box and a plurality of battery modules 4 arranged in the battery box. The battery box includes an upper box body 2 and a lower box body 3. The upper box body 2 is configured to cover the lower box body 3 to form enclosed space for accommodating the battery modules 4. The plurality of battery modules 4 may be arranged in the battery box in any manner.

### Electric apparatus

An embodiment of this application further provides an electric apparatus. The electric apparatus includes at least one of the secondary battery, the battery module, or the battery pack provided in the embodiments of this application. The secondary battery, the battery module, or the battery pack may be used as a power source for the electric apparatus, or an energy storage unit of the electric apparatus. The electric apparatus may be but is not limited to a mobile device (for example, a mobile phone or a notebook computer), an electric vehicle (for example, a battery electric vehicle, a hybrid electric vehicle, a plug-in hybrid electric vehicle, an electric bicycle, an electric scooter, an electric golf vehicle, or an electric truck), an electric train, a ship, a satellite, or an energy storage system.

The secondary battery, the battery module, or the battery pack may be selected for the electric apparatus based on requirements for using the electric apparatus.

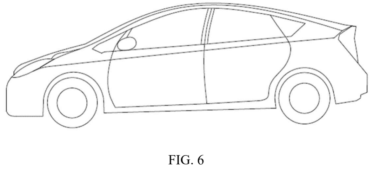

FIG. 6 is a schematic diagram of an electric apparatus as an example. This electric apparatus is a battery electric vehicle, a hybrid electric vehicle, a plug-in hybrid electric vehicle, or the like. To satisfy requirements of the electric apparatus for high power and high energy density, a battery pack or a battery module may be used.

In another example, the electric apparatus may be a mobile phone, a tablet computer, a notebook computer, or the like. Such electric apparatus is generally required to be light and thin and may use a secondary battery as its power source.

### Examples

Content disclosed in this application is described in detail in the following examples. These examples are only for illustrative purposes because various modifications and changes made without departing from the scope of the content disclosed in this application are apparent to persons skilled in the art. Unless otherwise stated, all parts, percentages, and ratios reported in the following examples are based on mass, all reagents used in the examples are commercially available or synthesized in a conventional manner, and can be used directly without further treatment, and all instruments used in the examples are commercially available.

The secondary batteries of Examples 1-12 and Comparative Examples 1-3 were all prepared according to the following methods.

### Preparation of separator

A first base film and a second base film were provided. The parameters of the first base film and the second base film are shown in Table 1.

A binding layer slurry was provided: Boehmite, polyacrylate, and carboxymethyl cellulose were mixed to uniformity in a mass ratio of 4:1:1 in an appropriate amount of solvent deionized water to prepare the binding layer slurry.

The binding layer slurry was applied to the first base film by using a coater, and the other unwinding roller was placed with the second base film, which was laminated with the binding layer slurry surface of the first base film. The oven temperature was controlled at 40°C, drying was performed for 5s, and lamination was performed under a pressure of 10N to obtain a separator.

### Preparation of positive electrode plate

A positive electrode active material LiNi_{0.8}Co_{0.1}Mn_{0.1}O₂ (NCM811), a conductive agent carbon black (Super P), and a binder poly(vinylidene difluoride) (PVDF) were mixed to uniformity at a mass ratio of 96.2:2.7:1.1 in a solvent N-methylpyrrolidone (NMP) to obtain a positive electrode slurry. The positive electrode slurry was applied on a positive electrode current collector aluminum foil, followed by processes such as drying, cold pressing, slitting, and cutting to obtain a positive electrode plate.

### Preparation of negative electrode plate

A negative electrode active material artificial graphite, a conductive agent carbon black (Super P), a binder styrene-butadiene rubber (SBR), and sodium carboxymethyl cellulose (CMC) were mixed to uniformity at a mass ratio of 96.4:0.7:1.8:1.1 in an appropriate amount of solvent deionized water to obtain a negative electrode slurry. The negative electrode slurry was applied on a negative electrode current collector copper foil, followed by processes of drying, cold pressing, slitting, and cutting to obtain a negative electrode plate.

### Preparation of electrolyte

Ethylene carbonate (EC), dimethyl carbonate (DMC), and ethyl methyl carbonate (EMC) were mixed in a mass ratio of 30:30:40 to obtain an organic solvent. Fully dried LiPF₆ was dissolved in the organic solvent to prepare an electrolyte with a concentration of 1 mol/L.

### Preparation of secondary battery

The positive electrode plate, the separator, and the negative electrode plate were sequentially stacked and wound to obtain an electrode assembly. The electrode assembly was placed into an outer package and dried. Then the electrolyte was injected, and processes such as vacuum packaging, standing, formation, and shaping were performed to obtain a secondary battery.

In the above examples and comparative examples, the stiffnesses of the separator, the first base film, and the second base film in the transverse (TD) direction and the machine (MD) direction can be tested by using the inclined plane method according to GB/T 18318-2009, ZB WO 4003-87. The testing instrument can be a fully automatic stiffness tester (such as the Derek DRK309 automatic fabric stiffness tester). During testing, multiple samples (for example, 12 samples) can be punched out from the separator by using a punching machine. The sample size can be 25 mm × 250 mm, with half of the samples having their long edges parallel to the transverse (TD) direction of the separator and the other half having their long edges parallel to the machine (MD) direction of the separator. The angle of the inclined plane can be 41.5°, and the feeding speed of the sample can be 4 mm/s.

In Table 1, the stiffness of the separator in the transverse (TD) direction is denoted as T₀, the stiffness of the separator in the machine (MD) direction is denoted as M₀, the stiffness of the first base film in the transverse (TD) direction is denoted as T₁, the stiffness of the first base film in the machine (MD) direction is denoted as M₁, the stiffness of the second base film in the transverse (TD) direction is denoted as T₂, and the stiffness of the second base film in the machine (MD) direction is denoted as M₂.

### Tests

### (1) Test for thermal shrinkage of separator

Sample preparation: The separator prepared above was punched into samples with a width of 50 mm and a length of 100 mm by using a punching machine. Five parallel samples were taken and placed on a glass plate and fixed.

Sample testing: The temperature of the blast oven was set to 250 °C. After the temperature reached the set temperature and remained at that temperature for 60 minutes, the glass plate was placed in the blast oven and timed for 1 hour. After the test, the width of the separator was measured and marked as a.

Thermal shrinkage calculation: Transverse (TD) thermal shrinkage = [(50-a)/50]×100%. The average value of five parallel samples was taken as the test result.

### (2) Nail penetration test of secondary battery

At 25 °C, the secondary battery was charged at a constant current of 1 C to 4.2 V, then continued to be charged at a constant voltage until the current was ≤0.05 C, and then left standing for 5 min. At this time, the secondary battery was in a 100% SOC state. A high-temperature resistant steel nail with a diameter of 1 mm (the conical angle of the nail tip was 30°) was used for the nail penetration test, with a nail penetration speed of 0.01 mm/s. When the penetration depth reached 3 mm, penetration stopped and the nail was held in this state for 60 min to check whether the secondary battery failed. The criterion for determining the failure of the secondary battery was that the voltage dropped to 0 V. Ten secondary batteries were tested, and the number of secondary batteries that passed the nail penetration test was counted.

More secondary batteries passing the nail penetration test means that the secondary batteries had better reliability.

### (3) Production yield of secondary battery

The secondary battery was placed at a test position of a hot press, with the pressure set to 5 MPa, the temperature set to 95°C, and the hot pressing time set to 5s. The instrument display was observed. When the instrument displayed OK, it indicated a pass, and other displays indicated abnormality. 100 secondary batteries were tested, and the pass rate of the hot press test was used as the production yield of the secondary batteries.

As can be seen from the test results in Table 1, when the separator includes the first base film, the second base film, and the binding layer located between the first base film and the second base film, the stiffness T₀ of the separator in the transverse (TD) direction is between 1.0 mN×cm and 8.0 mN×cm, and the stiffness M₀ of the separator in the machine (MD) direction is between 1.2 mN×cm and 7.0 mN×cm, the thermal shrinkage of the separator can be reduced, the pass rate of the nail penetration test of the secondary battery can be improved, the reliability of the secondary battery can be enhanced, and the production yield of the secondary battery can also be improved.

It should be noted that this application is not limited to the foregoing embodiments. The foregoing embodiments are merely examples, and embodiments having substantially the same constructions and having the same effects as the technical idea within the scope of the technical solutions of this application are all included in the technical scope of this application. In addition, without departing from the essence of this application, various modifications made to the embodiments that can be conceived by persons skilled in the art, and other manners constructed by combining some of the constituent elements in the embodiments are also included in the scope of this application.

**Table 1**

| No. | First base film | | | | Second base film | | | | Performance of separator | | | | Performance of secondary battery | |
|---|---|---|---|---|---|---|---|---|---|---|---|---|---|---|
| | Material | T₁ (mN×cm) | M₁ (mN×cm) | T₁/M₁ | Material | T₂ (mN×cm) | M₂ (mN×cm) | T₂/M ₂ | T₀ (mN×cm) | M₀ (mN×cm) | T₀/M₀ | 250°C/lh transvers e thermal shrinkage | Pass rate of nail penetratio n test | Productio n yield |
| Example 1 | PE | 0.80 | 0.50 | 1.60 | PP | 0.80 | 0.50 | 1.60 | 1.70 | 1.20 | 1.42 | 1.90% | 9/10 | 83% |
| Example 2 | PE | 1.10 | 0.90 | 1.22 | PP | 1.10 | 0.90 | 1.22 | 2.30 | 2.00 | 1.15 | 1.70% | 10/10 | 87% |
| Example 3 | PE | 1.70 | 1.10 | 1.55 | PP | 1.60 | 1.20 | 1.33 | 3.50 | 2.50 | 1.40 | 1.50% | 10/10 | 86% |
| Example 4 | PE | 2.20 | 1.30 | 1.69 | PP | 2.40 | 1.70 | 1.41 | 4.70 | 3.30 | 1.42 | 1.10% | 10/10 | 88% |
| Example 5 | PE | 1.10 | 0.90 | 1.22 | PP | 3.50 | 2.10 | 1.67 | 4.90 | 3.40 | 1.44 | 1.50% | 9/10 | 84% |
| Example 6 | PE | 0.90 | 0.60 | 1.50 | PP | 0.95 | 0.80 | 1.19 | 2.40 | 1.90 | 1.26 | 1.80% | 10/10 | 85% |
| Example 7 | PE | 1.20 | 0.75 | 1.60 | PP | 1.50 | 0.90 | 1.67 | 3.10 | 1.80 | 1.72 | 1.40% | 10/10 | 84% |
| Example 8 | PE | 1.50 | 1.10 | 1.36 | PP | 0.90 | 1.20 | 0.75 | 2.70 | 2.40 | 1.13 | 1.40% | 9/10 | 86% |
| Example 9 | PE | 1.50 | 1.10 | 1.36 | PP | 2.80 | 1.30 | 2.15 | 4.50 | 2.70 | 1.67 | 1.20% | 9/10 | 85% |
| Example 10 | PE | 1.50 | 1.10 | 1.36 | PTFE | 0.30 | 0.30 | 1.00 | 1.90 | 1.50 | 1.27 | 0.20% | 9/10 | 82% |
| Example 11 | PE | 1.50 | 1.10 | 1.36 | PET | 0.80 | 0.60 | 1.33 | 2.60 | 1.90 | 1.37 | 0.40% | 9/10 | 81% |
| Example 12 | PE | 1.50 | 1.10 | 1.36 | PI | 1.50 | 1.20 | 1.25 | 3.40 | 2.70 | 1.26 | 0.30% | 8/10 | 83% |
| Comparative Example 1 | PE | 0.25 | 0.13 | 1.92 | PP | 0.30 | 0.18 | 1.67 | 0.58 | 0.37 | 1.57 | 4.30% | 1/10 | 54% |
| Comparative Example 2 | PE | 4.90 | 4.30 | 1.14 | PP | 5.80 | 5.20 | 1.12 | 11.00 | 9.80 | 1.12 | 3.90% | 0/10 | 43% |
| Comparative Example 3 | PE | 4.30 | 2.80 | 1.54 | PP | 2.40 | 1.60 | 1.50 | 8.60 | 4.70 | 1.83 | 4.50% | 0/10 | 32% |

## Claims

1. A separator, comprising:
a first base film;
a second base film; and
a binding layer disposed between the first base film and the second base film; wherein
a stiffness of the separator in a transverse direction is denoted as T₀, and a stiffness of the separator in a machine direction is denoted as M₀, wherein T₀ is 1.0-8.0 mN×cm, and M₀ is 1.2-7.0 mN×cm.

2. The separator according to claim 1, wherein
the stiffness T₀ of the separator in the transverse direction is 1.7-5.0 mN×cm, optionally 1.9-4.7 mN×cm; and/or
the stiffness M₀ of the separator in the machine direction is 1.2-4.0 mN×cm, optionally 1.5-3.3 mN×cm.

3. The separator according to claim 1 or 2, wherein T₀/M₀ is 1.0-2.5, optionally 1.2-2.0.

4. The separator according to any one of claims 1 to 3, wherein
a stiffness of the first base film in a transverse direction is denoted as T₁, wherein T₁ is 0.25-4.5 mN×cm, optionally 0.9-3.0 mN×cm;
a stiffness of the first base film in a machine direction is denoted as M₁, wherein M₁ is 0.15-4.0 mN×cm, optionally 0.6-3.0 mN×cm;
a stiffness of the second base film in a transverse direction is denoted as T₂, wherein T₂ is 0.3-5.0 mN×cm, optionally 0.8-3.5 mN×cm; and/or
a stiffness of the second base film in a machine direction is denoted as M₂, wherein M₂ is 0.2-4.5 mN×cm, optionally 0.5-3.0 mN×cm.

5. The separator according to claim 4, wherein
T₁/M₁ is 1.0-3.0, optionally 1.2-2.0; and/or
T₂/M₂ is 1.0-3.5, optionally 1.1-1.9.

6. The separator according to any one of claims 1 to 5, wherein
an average fiber diameter of the first base film is 80-300 nm, optionally 100-280 nm; and/or
an average fiber diameter of the second base film is 100-300 nm, optionally 120-280 nm.

7. The separator according to any one of claims 1 to 6, wherein
a ratio of a crystallinity of the second base film to a crystallinity of the first base film is greater than 1, optionally 1.03-1.5, and more optionally 1.05-1.25;
a crystallinity of the first base film is 33%-70%, optionally 35%-45%; and/or
a crystallinity of the second base film is 35%-80%, optionally 40%-55%.

8. The separator according to any one of claims 1 to 7, wherein
a ratio of a thickness of the second base film to a thickness of the first base film is greater than 1, optionally 1.02-5.0, and more optionally 1.2-2.5;
a thickness of the first base film is less than or equal to 12 µm, optionally 2.5-5 µm; and/or
a thickness of the second base film is less than or equal to 14 µm, optionally 3-6 µm.

9. The separator according to any one of claims 1 to 8, wherein
a ratio of a melting point of the first base film to a melting point of the second base film is less than 1, optionally 0.2-0.95, and more optionally 0.35-0.90;
a melting point of the first base film is greater than or equal to 110°C, optionally 120°C-165°C; and/or
a melting point of the second base film is greater than or equal to 150°C, optionally 165°C-330°C.

10. The separator according to any one of claims 1 to 9, wherein
a ratio of a porosity of the second base film to a porosity of the first base film is greater than 1, optionally 1.01-2.8, and more optionally 1.1-2.0;
a porosity of the first base film is 28%-70%, optionally 30%-50%;
a porosity of the second base film is 30%-80%, optionally 35%-60%; and/or
a porosity of the separator is 27%-65%, optionally 33%-55%.

11. The separator according to any one of claims 1 to 10, wherein
a ratio of an average pore size of the second base film to an average pore size of the first base film is greater than 1, optionally 1.05-2.5, and more optionally 1.1-2;
an average pore size of the first base film is 48-1800 nm, optionally 50-300 nm; and/or
an average pore size of the second base film is 50-2000 nm, optionally 100-400 nm.

12. The separator according to any one of claims 1 to 11, wherein
a ratio of an air permeability of the first base film to an air permeability of the second base film is greater than 1, optionally 1.05-3.0, and more optionally 1.08-2.0;
an air permeability of the first base film is less than or equal to 300 s/100 cc, optionally 120-260 s/100 cc; and/or
an air permeability of the second base film is less than or equal to 250 s/100 cc, optionally 110-220 s/100 cc.

13. The separator according to any one of claims 1 to 12, wherein
the first base film and the second base film each independently comprise one or more of polyolefin and a derivative thereof, halogenated polyolefin and a derivative thereof, polyether and a derivative thereof, polyether ether ketone and a derivative thereof, polyester and a derivative thereof, polyimide and a derivative thereof, and polyvinyl alcohol and a derivative thereof;
optionally, the halogenated polyolefin and a derivative thereof comprise one or more of polytetrafluoroethylene and a derivative thereof, polyvinyl fluoride and a derivative thereof, and polyvinylidene fluoride and a derivative thereof; and
optionally, the polyester and a derivative thereof comprise one or more of polyethylene terephthalate and a derivative thereof, and polybutylene terephthalate and a derivative thereof.

14. The separator according to any one of claims 1 to 13, wherein
the binding layer comprises a binder;
optionally, the binding layer comprises a binder and a filler;
optionally, the binder comprises one or more of polyacrylate, polyacrylic acid, polytetrafluoroethylene, polyvinylidene fluoride, vinylidene fluoride-trichloroethylene copolymer, polyvinyl pyrrolidone, polyvinyl acetate, ethylene-vinyl acetate copolymer, polyethylene oxide, polyarylate, carboxymethyl cellulose, hydroxypropyl cellulose, regenerated cellulose, cellulose acetate, cellulose acetate propionate, cellulose acetate butyrate, polyacrylonitrile, polyvinyl alcohol, polyethylene, polypropylene, starch, and cyanoethyl branched starch;
optionally, the filler comprises at least one of inorganic particle, organic particle, and organic-metal framework material;
optionally, the inorganic particle comprises one or more of inorganic particle with a dielectric constant above 5, inorganic particle with ionic conductivity but not storing an ion, and inorganic particle capable of undergoing an electrochemical reaction;
optionally, the organic particle comprises one or more of polycarbonate, polythiophene, polypyridine, polystyrene, polyacrylic wax, polyethylene, polypropylene, cellulose, cellulose modifier, melamine resin, phenolic resin, polyester, silicone resin, polyimide, polyamide-imide, polyaromatic amide, polyphenylene sulfide, polysulfone, polyether sulfone, polyether ether ketone, polyarylether ketone, and copolymer of butyl acrylate and ethyl methacrylate; and
optionally, the organic-metal framework material comprises one or more of nitrogen-containing heterocyclic ligand assembly structure, organic carboxylic acid ligand assembly structure, and nitrogen-oxygen mixed ligand assembly structure.

15. The separator according to any one of claims 1 to 14, wherein
a thickness of the binding layer is greater than or equal to 0.3 µm, optionally 0.5-4 µm;
a surface density of the binding layer is 1.0-6.0 g/m², optionally 1.2-5.0 g/m²;
a binding strength between the binding layer and the first base film is greater than or equal to 3 N/m, optionally 4-15 N/m; and/or
a binding strength between the binding layer and the second base film is greater than or equal to 3 N/m, optionally 4-15 N/m.

16. The separator according to claim 14 or 15, wherein
a percentage of the binder is greater than or equal to 10%, optionally 10%-30%, based on a total weight of the binding layer;
a percentage of the filler is less than or equal to 90%, optionally 60%-80%, based on a total weight of the binding layer; and/or
a volume distribution particle size Dᵥ50 of the filler is less than or equal to 1.5 µm, optionally 0.1-1.4 µm.

17. The separator according to any one of claims 1 to 16, wherein the separator satisfies at least one of the following conditions (1) to (4):
(1) a transverse tensile strength of the separator is greater than or equal to 700 kg/cm², optionally greater than or equal to 1000 kg/cm²;
(2) a machine tensile strength of the separator is greater than or equal to 1000 kg/cm², optionally greater than or equal to 1200 kg/cm²;
(3) a transverse thermal shrinkage of the separator at 250°C for 1 h is less than or equal to 5%, optionally less than or equal to 2%; and
(4) a machine thermal shrinkage of the separator at 250°C for 1 h is less than or equal to 5%, optionally less than or equal to 2%.

18. A secondary battery, comprising the separator according to any one of claims 1 to 17.

19. The secondary battery according to claim 18, wherein the secondary battery comprises a positive electrode plate and a negative electrode plate, the separator is disposed between the positive electrode plate and the negative electrode plate, and the first base film of the separator faces towards the negative electrode plate and the second base film of the separator faces towards the positive electrode plate.

20. An electric apparatus, comprising the secondary battery according to claim 18 or 19.
